(19) Europäisches Patentamt
European Patent Office
Office européen des brevets

(11) EP 2 746 312 A2

(12) EUROPEAN PATENT APPLICATION

(43) Date of publication:
**25.06.2014 Bulletin 2014/26**

(51) Int Cl.:
***C08G 59/24*** *(2006.01)*

(21) Application number: **13190894.9**

(22) Date of filing: **30.10.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **20.12.2012 US 201261739837 P**

(71) Applicant: **Dow Global Technologies LLC**
**Midland, MI 48674 (US)**

(72) Inventors:
- **Drumright, Ray E.**
  **Midland, MI Michigan 48640 (US)**
- **Hefner, Jr., Robert E.**
  **Rosharon, TX Texas 77583 (US)**
- **Wu, Jinghang**
  **Midland, MI Michigan 48642 (US)**

(74) Representative: **Buckley, Guy Julian**
**Patent Outsourcing Limited**
**1 King Street**
**Bakewell**
**Derbyshire DE45 1DZ (GB)**

# (54) Epoxy resin compositions, methods of making same, and articles thereof

(57) Epoxy resins comprising a diglycidyl ether of Formula 1 as defined herein are described. The diglycidyl ether contains a cycloaliphatic ring of 3-5 carbon atoms. The epoxy resins are made by a method comprising the steps of: (a) forming a reaction mixture comprising a diol of Formula 3 as defined herein, an epihalohydrin, a phase transfer catalyst, and optionally an organic solvent; (b) contacting a basic acting substance and water with the reaction mixture of step (a); (c) washing the mixture of step (b) with an aqueous solvent to substantially remove salts; and (d) isolating the epoxy resin. Curable and cured compositions comprising the epoxy resins are also disclosed. The epoxy resins have increased glass transition temperatures and reduced viscosity compared to epoxy resins derived from cyclohexanedimethanol.

EP 2 746 312 A2

## Description

### BACKGROUND OF THE INVENTION

This disclosure relates to epoxy resin compositions, methods of making same, and articles thereof.

Thermoset materials are formed from the reaction of an epoxy resin and a curing agent (hardener). Epoxy resins based on bisphenol A are widely used in the coatings industry. Epoxy resins can be cured through the terminal epoxy groups and the multiple secondary hydroxyl groups along the backbones to provide articles with good mechanical properties and performance. However, the bisphenol A based epoxy resins have limited flexibility and toughness at room temperature, which is a drawback in many applications. Moreover, the aromatic rings present in bisphenol A epoxy resins result in cured epoxy resins having poor weatherability (UV resistance). This is manifested as chalking and yellowing of coatings exposed to UV radiation.

Recently, epoxy resins based on diglycidyl ethers of cyclohexanedimethanol have been shown to be useful in applications such as electrical laminates, coatings, castings, and adhesives due to their improved flexibility, weatherability, moisture resistance and reduced viscosity relative to epoxy resins based on bisphenol A. However, there is room for improvement of the properties provided by the diglycidyl ethers of cyclohexanedimethanol, particularly reduction of viscosity of the epoxy resin, and increase in glass transition temperature of the cured epoxy resin. It would therefore be advantageous to have an epoxy resin which provides thermosets having a glass transition temperature greater than room temperature as well as good weatherability. Even more advantageous would be an epoxy resin which provides the aforementioned property improvements along with lower viscosity. A lower viscosity would result in higher solids content (lower VOC) curable compositions, and curable compositions that can accept higher filler loadings than epoxy resins based on cyclohexanedimethanol. It would also be advantageous to provide an epoxy resin with low total chloride content (including ionic, hydrolysable, and total chloride) in order to reduce the potential corrosivity of the epoxy resin.

### SUMMARY OF THE INVENTION

The need for an aliphatic epoxy resin having increased glass temperature and reduced viscosity is met by an epoxy resin comprising a diglycidyl ether of Formula 1

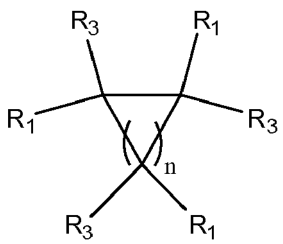 1

wherein n is 1, 2, or 3; each $R_1$ is independently hydrogen, $C_{1-12}$ alkyl, $C_{3-12}$ cycloalkyl, or $C_{6-24}$ aryl; and each $R_3$ is independently hydrogen, $C_{1-12}$ alkyl, $C_{3-12}$ cycloalkyl, $C_{6-24}$ aryl, or a glycidyl ether group, with the proviso that the diglycidyl ether has two glycidyl ether groups.

Another embodiment of the invention is a method of making an epoxy resin comprising the steps of: (a) forming a reaction mixture comprising a diol of Formula 3

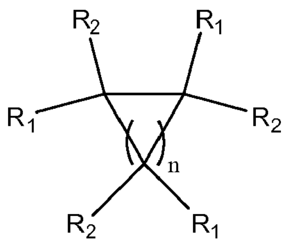 3

wherein n is 1, 2, or 3; each $R_1$ is independently hydrogen, $C_{1-12}$ alkyl, $C_{3-12}$ cycloalkyl, or $C_{6-24}$ aryl; and each $R_2$ is independently hydrogen, $C_{1-12}$ alkyl, hydroxyl, $C_{1-12}$ hydroxyalkyl, or $C_{6-24}$ hydroxyaryl, with the proviso that the diol has two hydroxyl, $C_{1-12}$ hydroxyalkyl, or $C_{6-24}$ hydroxyaryl groups; an epihalohydrin; a phase transfer catalyst; and optionally an organic solvent; (b) contacting a basic acting substance and water with the reaction mixture of step (a); (c) washing the mixture of step (b) with an aqueous solvent to substantially remove salts; and (d) isolating the epoxy resin.

Another embodiment of the invention is a curable composition comprising an epoxy resin comprising a diglycidyl ether of Formula 1, a curing agent, and optionally a curing catalyst.

Another embodiment of the invention is a cured composition comprising a reaction product of an epoxy resin comprising a diglycidyl ether of Formula 1 and a curing agent.

DETAILED DESCRIPTION OF THE INVENTION

Curable epoxy resin compositions can be made from diglycidyl ethers of cyclohexanedimethanols. However the glass transition temperature of cured epoxy resin compositions based on diglycidyl ethers of cyclohexanedimethanols is low. The Applicants surprisingly found that reducing the ring size of the cycloaliphatic group of the diglycidyl ether of cycloaliphatic diols results in cured epoxy resins with increased glass transition temperatures. The Applicants have further found that the diglycidyl ether and epoxy resins containing the diglycidyl ether have surprisingly low viscosity. The low viscosity of the diglycidyl ether makes it especially attractive as a reactive epoxy resin diluent, especially for use in coatings, electronics, and electrical laminate applications. The high reactivity and inherently low to non-existent chloride content of the diglycidyl ethers, and the relatively high glass transition temperature of cured compositions comprising the diglycidyl ethers provide additional benefits for coatings, electronics, and electrical laminate applications.

The Applicants have also developed methods for making and purifying the diglycidyl ethers, and have surprisingly found that the diglycidyl ethers can be obtained in very high purity by this method. Moreover, the method provides unexpected high selectivity for making the diglycidyl ether over chloromethylated oligomers.

The terms "a" and "an" do not denote a limitation of quantity, but rather the presence of at least one of the referenced item. The term "or" means "and/or." The open-ended transitional phrase "comprising" encompasses the intermediate transitional phrase "consisting essentially of" and the close-ended phrase "consisting of." Claims reciting one of these three transitional phrases, or with an alternate transitional phrase such as "containing" or "including" can be written with any other transitional phrase unless clearly precluded by the context or art. Recitation of ranges of values are merely intended to serve as a shorthand method of referring individually to each separate value falling within the range, unless otherwise indicated herein, and each separate value is incorporated into the specification as if it were individually recited herein. The endpoints of all ranges are included within the range and are independently combinable.

"Combination" is inclusive of blends, mixtures, alloys, reaction products, and the like. The terms "first," "second," and the like, herein do not denote any order, quantity, or importance, but rather are used to denote one element from another. The suffix "(s)" as used herein is intended to include both the singular and the plural of the term that it modifies, thereby including one or more of that term (e.g., the film(s) includes one or more films). Reference throughout the specification to "one embodiment", "another embodiment", "an embodiment", and so forth, means that a particular element (e.g., feature, structure, and/or characteristic) described in connection with the embodiment is included in at least one embodiment described herein, and may or may not be present in other embodiments. In addition, it is to be understood that the described elements can be combined in any suitable manner in the various embodiments.

Compounds are described herein using standard nomenclature and chemical structure diagrams. For example, any position not substituted by any indicated group is understood to have its valency filled by indicated bonds, and/or a hydrogen atom(s). The term "alkyl" as used herein refers to straight chain and branched aliphatic hydrocarbon groups having the specified number of carbon atoms. Examples of alkyl include, but are not limited to, methyl, ethyl, n-propyl, i-propyl, n-butyl, s-butyl, t-butyl, n-pentyl, s-pentyl, n- and s-hexyl, n-and s-heptyl, and, n- and s-octyl. The term "cycloalkyl" as used herein refers to a cycloaliphatic group group, optionally comprising straight chain or branched aliphatic substituent(s), and having the specified number of carbon atoms. The term "aryl" as used herein refers to an aromatic group, optionally comprising straight or branched chain aliphatic substituent(s), and having the specified number of carbon atoms.

As used herein, the term "thermoset" refers to a polymer that can solidify or "set" irreversibly when heated. The terms "curable" and "thermosettable" are synonyms and mean the composition is capable of being converted to a cured or thermoset state or condition. The term "cured" or "thermoset" is defined by L. R. Whittington in Whittington's Dictionary of Plastics (1968) on page 239 as follows: "Resin or plastics compounds which in their final state as finished articles are substantially infusible and insoluble. Thermosetting resins are often liquid at some stage in their manufacture or processing, and are cured by heat, catalysis, or some other chemical means." After being fully cured, thermosets do not flow appreciably, and cannot be substantially reshaped by application of heat. The term "B-stage" as used herein refers to a thermoset resin that has been partially cured so that the product still has full to partial solubility in a solvent such as an alcohol or a ketone.

The epoxy resin comprises a diglycidyl ether of Formula 1

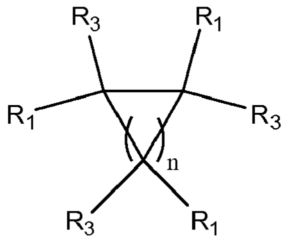

1

wherein n is 1, 2, or 3; each $R_1$ is independently hydrogen, $C_{1-12}$ alkyl, $C_{3-12}$ cycloalkyl, or $C_{6-24}$ aryl; and each $R_3$ is independently hydrogen, $C_{1-12}$ alkyl, $C_{3-12}$ cycloalkyl, $C_{6-24}$ aryl, or a glycidyl ether group, with the proviso that the diglycidyl ether has two glycidyl ether groups.

The diglycidyl ether, which can be isolated from the epoxy resin, comprises one or more of a cyclopropane ring, a cyclobutane ring, and a cyclopentane ring, corresponding to n = 1, 2 and 3 respectively. Each glycidyl ether group independently has the Formula 2

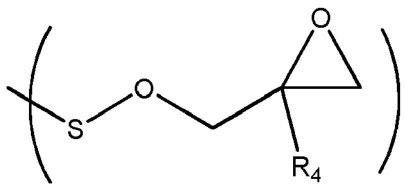

2

wherein $R_4$ is hydrogen or a $C_{1-4}$ alkyl, specifically hydrogen or methyl, and S is a direct bond, $C_{1-12}$ alkylene, or $C_{6-24}$ aryl, specifically a direct bond or methylene. Examples of the diglycidyl ether are cyclobutane-1,3-diglycidyl ether, cyclobutane-1,2-diglycidyl ether, mono-$C_{1-4}$ alkyl-cyclobutane-1,3-diglycidyl ethers, mono-$C_{1-4}$ alkyl-cyclobutane-1,2-diglycidyl ethers, di-$C_{1-4}$ alkyl-cyclobutane-1,3-diglycidyl ethers, di-$C_{1-4}$ alkyl-cyclobutane-1,2-diglycidyl ethers, tri-$C_{1-4}$ alkyl-cyclobutane-1,3-diglycidyl ethers, tetra-$C_{1-4}$ alkyl-cyclobutane diglycidyl ethers, cyclopropane-1,2-diglycidyl ether, mono-$C_{1-4}$ alkyl-cyclopropane-1,2-diglycidyl ethers, di-$C_{1-4}$ alkyl-cyclopropane-1,2-diglycidyl ethers, cyclopentane-1,2-diglycidyl ether, cyclopentane-1,3-diglycidyl ether, mono-$C_{1-4}$ alkyl-cyclopentane-1,2-diglycidyl ethers, mono-$C_{1-4}$ alkyl-cyclopentane-1,3-diglycidyl ethers, di-$C_{1-4}$ alkyl-cyclopentane-1,2-diglycidyl ethers, di-$C_{1-4}$ alkyl-cyclopentane-1,3-diglycidyl ethers, tri-$C_{1-4}$ alkyl-cyclopentane-1,2-diglycidyl ethers, tri-$C_{14}$ alkyl-cyclopentane-1,3-diglycidyl ethers, tetra-$C_{1-4}$ alkyl-cyclopentane-1,2-diglycidyl ethers, tetra-$C_{1-4}$ alkyl-cyclopentane-1,3-diglycidyl ethers, penta-$C_{1-4}$ alkyl-cyclopentane-1,2-diglycidyl ethers, penta-$C_{1-4}$ alkyl-cyclopentane-1,3-diglycidyl ethers, hexa-$C_{1-4}$ alkyl-cyclopentane-1,2-diglycidyl ethers, hexa-$C_{1-4}$ alkyl-cyclopentane-1,3-diglycidyl ethers, and a combination comprising one or more of the foregoing. In some embodiments, the diglycidyl ether comprises cis- and trans-2,2,4,4-tetramethylcyclobutane-1,3-diglycidyl ether.

The epoxy resin can comprise greater than or equal to 50 area %, specifically greater than or equal to 70 area %, specifically greater than or equal to 85 area %, specifically greater than or equal to 90 area %, more specifically greater than or equal to 95 area %, still more specifically greater than or equal to 98 area %, yet more specifically greater than or equal 99 area %, and even more specifically greater than or equal to 99.5 area %, of the diglycidyl ether of Formula 1, based on total peak area for the epoxy resin as determined by gas chromatography. The target purity depends upon the intended end use, and is achieved by purification methods described below. The balance of components in the epoxy resin can comprise a monoglycidyl ether of Formula 1 wherein n is 1, 2, or 3; each $R_1$ is independently hydrogen, $C_{1-12}$ alkyl, $C_{3-12}$ cycloalkyl, or $C_{6-24}$ aryl; and each $R_3$ is independently hydrogen, $C_{112}$ alkyl, $C_{3-12}$ cycloalkyl, $C_{6-24}$ aryl, hydroxyl, $C_{1-12}$ hydroxyalkyl, $C_{6-24}$ hydroxyaryl, or a glycidyl ether group, with the proviso that the monoglycidyl ether has one glycidyl ether group and one hydroxyl, $C_{1-12}$ hydroxyalkyl, or $C_{6-24}$ hydroxyaryl group; oligomers; and other minor components present at less than 5 area %.

The epoxy resin can be formed by an aqueous epoxidation process. In particular, the epoxy resin can be formed by reacting a diol and an epihalohydrin in the presence of one or more basic acting substance, water, and optionally, one or more catalysts and/or organic solvents. The resultant epoxy resin can optionally be purified to produce the diglycidyl ether. Thus a method of making an epoxy resin comprises the steps of: (a) forming a reaction mixture comprising a diol of Formula 3

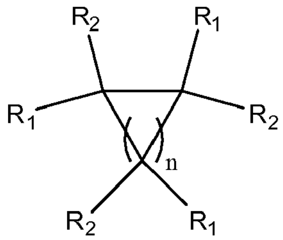

3

wherein n and $R_1$ are as defined above, and each $R_2$ is independently hydrogen, $C_{1-12}$ alkyl, hydroxyl, $C_{1-12}$ hydroxyalkyl, or $C_{6-24}$ hydroxyaryl, with the proviso that the diol has two hydroxyl, $C_{1-12}$ hydroxyalkyl, or $C_{6-24}$ hydroxyaryl groups; an epihalohydrin; a phase transfer catalyst; and optionally an organic solvent; (b) contacting a basic acting substance and water with the mixture of step (a); (c) washing the mixture of step (b) with an aqueous solvent to substantially remove salts to form the epoxy resin comprising a diglycidyl ether of Formula 1,

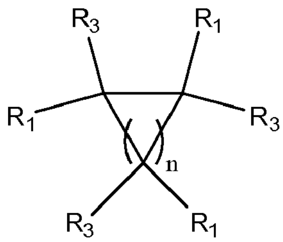

1

wherein n, $R_1$, and $R_3$ are as defined above, with the proviso that the diglycidyl ether has two glycidyl ether groups; and (d) isolating the epoxy resin. All of the above-described variations in the epoxy resin and the diglycidyl ether apply as well to the method of making the epoxy resin. An aspect of the invention is an epoxy resin made by the method.

The diglycidyl ether, which can be isolated from the epoxy resin, comprises one or more of a cyclopropane ring, a cyclobutane ring, and a cyclopentane ring, corresponding to n = 1, 2 and 3 respectively. Each glycidyl ether group independently has the Formula 2

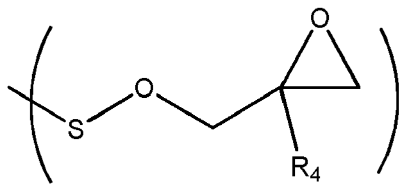

2

wherein $R_4$ is hydrogen or a $C_{1-4}$ alkyl, specifically hydrogen or methyl, and S is a direct bond, $C_{1-12}$ alkylene, or $C_{6-24}$ aryl, specifically a direct bond or methylene.

The diol has the Formula 3

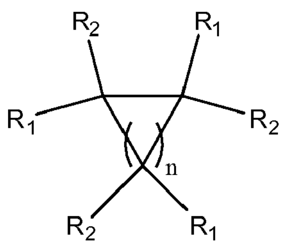

3

wherein n is 1, 2, or 3; each $R_1$ is independently hydrogen, $C_{1-12}$ alkyl, $C_{3-12}$ cycloalkyl, or $C_{6-24}$ aryl; each $R_2$ is independently hydrogen, $C_{1-12}$ alkyl, hydroxyl, $C_{1-12}$ hydroxyalkyl, or $C_{6-24}$ hydroxyaryl, with the proviso that the diol has two hydroxyl, $C_{1-12}$ hydroxyalkyl, or $C_{6-24}$ hydroxyaryl groups. Examples of the diol are cyclobutane-1,3-diol, cyclobutane-1,2-diol, mono-$C_{1-4}$ alkyl-cyclobutane-1,3-diols, mono-$C_{1-4}$ alkyl-cyclobutane-1,2-diols, di-$C_{1-4}$ alkyl-cyclobutane-1,3-diols, di-$C_{1-4}$alkyl-cyclobutane-1,2-diols, tri-$C_{1-4}$ alkyl-cyclobutane-1,3-diols, tetra-$C_{1-4}$ alkyl-cyclobutane diols, cyclopropane-1,2-diol, mono-$C_{1-4}$ alkyl-cyclopropane-1,2-diols, di-$C_{1-4}$ alkyl-cyclopropane-1,2-diols, cyclopentane-1,2-diol, cyclopentane-1,3-diol, mono-$C_{1-4}$ alkyl-cyclopentane-1,2-diols, mono-$C_{1-4}$ alkyl-cyclopentane-1,3-diols, di-$C_{1-4}$ alkyl-cy-

clopentane-1,2-diols, di-$C_{1-4}$ alkyl-cyclopentane-1,3-diols, tri-$C_{1-4}$ alkyl-cyclopentane-1,2-diols, tri-$C_{1-4}$ alkyl-cyclopentane-1,3-diols, tetra-$C_{1-4}$ alkyl-cyclopentane-1,2-diols, tetra-$C_{1-4}$ alkyl-cyclopentane-1,3-diols, penta-$C_{1-4}$ alkyl-cyclopentane-1,2-diols, penta-$C_{1-4}$ alkyl-cyclopentane-1,3-diols, hexa-$C_{1-4}$ alkyl-cyclopentane-1,2-diols, hexa-$C_{1-4}$ alkyl-cyclopentane-1,3-diols, or a combination comprising one or more of the foregoing. In some embodiments, the diol comprises cis- and trans-2,2,4,4-tetramethylcyclobutane-1,3-diol.

The epihalohydrin has the Formula 4

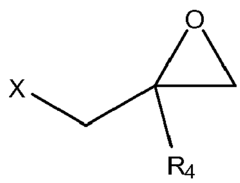

4

wherein $R_4$ is hydrogen or a $C_{1-4}$ alkyl group, and X is F, Cl, Br, or I. Examples of epihalohydrins are epifluorohydrin, epichlorohydrin, epibromohydrin, epiiodohydrin, substituted epihalohydrins, such as methylepichlorohydrin or chloroisobutylene oxide, or combinations comprising one or more of the foregoing. The epihalohydrin can serve not only as reactant but also as solvent or co-solvent if another solvent is employed.

The phase transfer catalyst can comprise one or more of quaternary ammonium, pyridinium, sulfonium, phosphonium, and thiazolium salts. Examples of phase transfer catalyst are n-benzylcinchonidinium chloride, n-benzylcinchoninium chloride benzyldimethylhexadecylammonium chloride, benzyldimethyltetradecylammonium chloride, benzyltributylammonium bromide, benzyltributylammonium chloride, benzyltriethylammonium bromide, benzyltriethylammonium chloride, benzyltriethylammonium iodide, benzyltriethylammonium tetrafluoroborate, benzyltrimethylammonium bromide, benzyltrimethylammonium chloride, benzyltriphenylphosphonium bromide, diethylmethylpropylammonium bromide, (-)-N,N-dimethylephedrinium bromide, 3,4-dimethyl-5-(2-hydroxyethyl)-thiazolium iodide, dodecylethyldimethylammonium bromide, (-)-N-dodecyl-N-methylephedrinium bromide, ethyldimethylpropylammonium bromide, ethylhexadecyldimethylammonium bromide, 3-ethyl -5-(2- hydroxyethyl)-4-methylthiazolium bromide, ethyltriphenylphosphonium bromide, hexadecylpyridinium bromide, hexadecylpyridinium chloride, hexadecyltributylphosphonium bromide, hexadecyltrimethylammonium bromide, hexadecyltrimethylammonium chloride, methyltrioctylammonium bromide, methyltrioctylammonium chloride, methyltrioctylammonium iodide, octadecyltrimethylammonium bromide, phenyltrimethylammonium bromide, phenyltrimethylammonium chloride, tetrabutylammonium bromide, tetrabutylammonium chloride, tetrabutylammonium hexafluorophosphate, tetrabutylammonium hydrogen sulphate, tetrabutylammonium hydroxide, tetrabutylammonium methanesulphonate, tetrabutylammonium perchlorate, tetrabutylammonium tetrafluoroporate, tetrabutylammonium tetraphenylborate, tetrabutylammonium trifluoromethanesulphonate, tetrabutylphosphonium chloride, tetradecyltrimethylammonium bromide, tetradodecylammonium bromide, tetradodecylammonium perchlorate, tetraethylammonium bromide, tetraethylammonium chloride, tetraethylammonium hexafluorophosphate, tetraethylammonium hydroxide, tetraethylammonium perchlorate, tetraethylammonium tetrafluoroburate, tetraethylammonium trifluoromethanesulphonate, tetraheptylammonium bromide, tetrahexylammonium benzoate, tetrahexylammonium bromide, tetrahexylammonium chloride, tetrahexylammonium hydrogen sulphate, tetrahexylammonium iodide, tetrahexylammonium perchlorate, tetrakis-(decyl)-ammonium bromide, tetrakis-(decyl)- ammonium perchlorate, tetraoctylammonium bromide, tetraoctylammonium perchlorate, tetrapentylammonium bromide, tetrapentylammonium iodide, tetraphenylarsonium chloride, tetraphenylphosphonium bromide, tetraphenylphosphonium chloride, tetrapropylammonium bromide, tetrapropylammonium hydroxide, tetrapropylammonium iodide, tetrapropylammonium perchlorate, tetrapropylammonium tetrafluoroborate, tributylheptylammonium bromide tributylmethylammonium bromide, tributylmethylammonium chloride, tributylmethylammonium hydroxide, tributylmethylammonium iodide, tributylpentylammonium bromide, tricaprylmethylammonium chloride ("Aliquat 336"), triethylammonium bromide, and combinations comprising one or more of the foregoing. In some embodiments, the phase transfer catalyst is selected from benzyltriethylammonium bromide, benzyltriethylammonium chloride, benzyltriethylammonium iodide, benzyltriethylammonium tetrafluoroborate, benzyltrimethylammonium bromide, benzyltrimethylammonium chloride, and a combination comprising one or more of the foregoing. The phase transfer catalyst can be added in an initial amount of 0.01 to 5 weight %, more specifically from 0.05 to 2.5 weight %, based on the weight of the diol. In some embodiments, an additional amount of phase transfer catalyst is added to the reaction mixture after one or more of steps (c).

The method optionally employs an organic solvent. The organic solvent, if used, can comprise aromatic hydrocarbons (such as toluene, benzene, and xylene), aliphatic hydrocarbons (such as pentane, hexane, heptane, and octane), ketones (such as acetone, methyl ethyl ketone, and methyl isobutyl ketone), ethers and cyclic ethers (such as diethyl ether, dibutyl ether, dioxane, ethylene glycol dimethyl ether, and tetrahydrofuran), halogenated hydrocarbons (such as carbon tetrachloride, trichloroethylene, chloroform, dichloromethane, ethylene dichloride, methyl chloroform, and tetrachloroethane), sulfoxides, amides (such as N,N-dimethylformamide and N,N-dimethylacetamide), aliphatic nitriles (such

as acetonitrile), or a combination comprising one or more of the foregoing. The organic solvent can be present in an amount of 1 to 250 weight %, specifically 1 to 50 weight % based on the total weight of the diol.

The method comprises contacting a basic acting substance and water with the mixture of diol, epihalohydrin, phase transfer catalyst, and optional organic solvent. Basic acting substances (bases) include alkali metal or alkaline earth metal hydroxides, carbonates and bicarbonates, and a combination thereof. Examples of basic acting substances are NaOH, KOH, LiOH, $Ca(OH)_2$, $Ba(OH)_2$, $Mg(OH)_2$, $Mn(OH)_2$, $Na_2CO_3$, $K_2CO_3$, $Li_2CO_3$, $CaCO_3$, $BaCO_3$, $Mg_2CO_3$, $MnCO_3$, $NaHCO_3$, $KHCO_3$, $MgHCO_3$, $LiHCO_3$, $Ca(HCO_3)_2$, $Ba(HCO_3)_2$, $Mn(HCO_3)_2$, and a combination thereof. In some embodiments, the basic acting substance is an alkali metal hydroxides, such as NaOH or KOH, both which can be added as aqueous solutions.

The diol, the epihalohydrin, the phase transfer catalyst, and optionally the organic solvent can be added to a reactor in any order. The equivalent ratio of hydroxyl groups in the diol to epihalohydrin can be 1:1 to 1:25, specifically 1:1.5 to 1:5, more specifically 1:2 to 1:3. The epoxidation can be conducted under an inert atmosphere such as nitrogen.

An embodiment of the invention is an epoxy resin made by the method described above.

Step (b), contacting a basic acting substance with the mixture of step (a) and step (c), washing the mixture of step (b) with an aqueous solvent to substantially remove salts, can be repeated at least once, specifically at least twice, and more specifically at least three times. Thus, the basic acting substance can be added in two or more stages, specifically in three or more stages, and more specifically in four or more stages. The total equivalent ratio of hydroxyl groups in the diol to basic acting substance can be 1:1 to 1:10, specifically 1:1.1 to 1:6, more specifically 1:1.2 to 1:4.5, independently in each step (b). The stoichiometric amount of basic acting substance added at each stage is independent of that added in the other stages. Thus, for example, in stage 1, a 1:1.2 equivalent ratio of hydroxyl groups in the diol to basic acting substance may be used followed by three additional stages each using a 1:1 equivalent ratio for a total equivalent ratio of 1:4.2 for the four stages. The basic acting substance can be dissolved in the water. The concentration of basic acting substance in the water varies depending upon the solubility of the particular basic acting substance employed, the temperature of the water, the viscosity of the resultant solution, and other variables. It is generally desirable to use the most concentrated aqueous basic acting substance which can be practically handled in the epoxidation process. In some embodiments, the basic acting substance is 50 weight % aqueous sodium hydroxide. Agitation is beneficially employed in the epoxidation at a rate such that the reactants are contacted together causing the reaction to progress. Each addition of basic acting substance is generally performed at a rate which maintains the desired temperature range in the reactor either with or without heating or cooling of the reactor. The reaction temperature can be from 20 °C to 75 °C, specifically from 20 °C to 50 °C, and more specifically from 25 °C to 40 °C.

After each stage of basic acting substance addition, the agitation can be stopped, and the formed epoxy resin can be washed by the addition of sufficient water to dissolve salts forming a separate aqueous phase. The separated aqueous layer can be removed and discarded and the organic layer recovered and added back into the reactor for use in the next stage of reaction with additional aqueous basic acting substance. Certain diols are incompletely soluble in the organic layer and are observed as a water insoluble precipitate which may be recovered and added back into the reactor for use in the next stage of reaction. A specific diol which exhibits only partial solubility in the organic phase is cis- and trans-2,2,4,4-tetramethylcyclobutane-1,3-diol. Because the phase transfer catalyst is partially or totally soluble in the aqueous phase, additional phase transfer catalyst is generally added to the reactor containing the organic phase after washing with water and prior to addition of more aqueous basic acting substance. Thus, in some embodiments, an additional amount of phase transfer catalyst is added to the reaction mixture after one or more of steps (c). Various analytical methods such as gas chromatography, high performance liquid chromatography, and gel permeation chromatography can be used to monitor the progress of the epoxidation.

In some embodiments, any unreacted diol of Formula 3 present in each step (c) is added back to the reaction mixture in each step (b). The diol of Formula 3 can be insoluble, or partly soluble, in the reaction mixture of step (a) comprising the diol, the epihalohydrin, the phase transfer catalyst, and optionally the organic solvent. For example, when the diol of Formula 3 is cis- and trans-2,2,4,4-tetramethylcyclobutane-1,3-diol, the epihalohydrin is epichlorohydrin, and the organic solvent is toluene, unreacted cis- and trans-2,2,4,4-tetramethylcyclobutane-1,3-diol is present as a solid phase in step (c). The solid cis- and trans-2,2,4,4-tetramethylcyclobutane-1,3-diol can be isolated by filtration, for example by vacuum filtration of the step (c) mixture through a fritted glass funnel. The cis- and trans-2,2,4,4-tetramethylcyclobutane-1,3-diol isolated by filtration can then be added back to the organic layer decanted from the aqueous wash layer of step (c), and steps (b) and (c) can be repeated. In this way, the conversion of cis- and trans-2,2,4,4-tetramethylcyclobutane-1,3-diol to cis- and trans-2,2,4,4-tetramethylcyclobutane-1,3-diglycidyl ether can be maximized.

As described above, step (b), contacting a basic acting substance with the mixture of step (a) and step (c), washing the mixture of step (b) with an aqueous solvent to substantially remove salts, can be repeated at least once, specifically at least twice, and more specifically at least three times. In this variation of the method, unreacted diol of Formula 3 present in each step (c) can be isolated and added back to the reaction mixture in each step (b). Thus, an embodiment of the invention is an epoxy resin made by the method in which steps (b) and (c) are repeated at least once, specifically at least twice, and more specifically at least three times, wherein unreacted diol of Formula 3 present in each

step (c) is isolated and added back to the reaction mixture in each step (b).

Contacting the basic acting substance and water with the mixture of step (a) can be accompanied by removal of water by distillation. Thus in some embodiments, the epoxy resin can be formed by an azeotropic or anhydrous process, the process comprising the steps of: (a) forming a reaction mixture comprising a diol of Formula 3

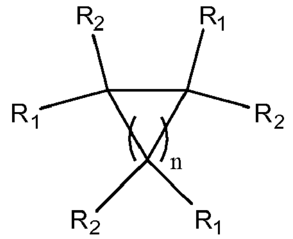

3

wherein n is 1, 2, or 3; each $R_1$ is independently hydrogen, $C_{1-12}$ alkyl, $C_{3-12}$ cycloalkyl, or $C_{6-24}$ aryl; and each $R_2$ is independently hydrogen, $C_{1-12}$ alkyl, hydroxyl, $C_{1-12}$ hydroxyalkyl, or $C_{6-24}$ hydroxyaryl, with the proviso that the diol has two hydroxyl, $C_{1-12}$ hydroxyalkyl, or $C_{6-24}$ hydroxyaryl groups; an epihalohydrin; a phase transfer catalyst; and optionally an organic solvent; (b) contacting a basic acting substance and water with the mixture of step (a) while removing water by distillation; (c) washing the mixture of step (b) with an aqueous solvent to substantially remove salts to form the epoxy resin comprising a diglycidyl ether of Formula 1,

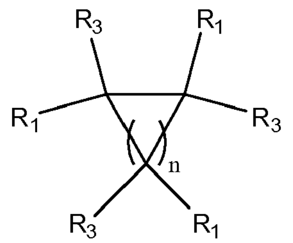

1

wherein n is 1, 2, or 3; each $R_1$ is independently hydrogen, $C_{1-12}$ alkyl, $C_{3-12}$ cycloalkyl, or $C_{6-24}$ aryl; and each $R_3$ is independently hydrogen, $C_{1-12}$ alkyl, $C_{3-12}$ cycloalkyl, $C_{6-24}$ aryl, or a glycidyl ether group, with the proviso that the diglycidyl ether has two glycidyl ether groups; and (e) isolating the epoxy resin. The distillation can be, for example, azeotropic distillation, co-distillation, or flash distillation. The distillation can be conducted under a vacuum sufficient to remove the water at the distillation temperature. In some embodiments, the distillation is azeotropic distillation. The azeotropic distillation can comprise distilling a binary epihalohydrin-water azeotrope or, when organic solvent is present, distilling a ternary epihalohydrin-water-organic solvent azeotrope, to remove the water.

As described above, the distillation can be azeotropic distillation. Thus an embodiment of the invention is an epoxy resin made by the method wherein contacting the basic acting substance and water with the mixture of step (a) is accompanied by removal of water by azeotropic distillation.

After a final stage of contacting a basic acting substance with the mixture of diol, epihalohydrin, phase transfer catalyst, and optional organic solvent, the epoxy resin can be isolated from the reaction mixture. The isolation can be performed using known methods such as water washing or extraction, solvent extraction, decantation, electrostatic coalescence, gravity filtration, vacuum filtration, centrifugation, distillation, falling film distillation, wiped film distillation, column chromatography, and a combination comprising one or more of the foregoing. In some embodiments, the isolation can comprise the steps of washing the epoxy resin with water in an amount sufficient to substantially remove salts, and vacuum distillation, for example by rotary evaporation, to remove volatile components such as the organic solvent and unreacted epihalohydrin, when present.

During the isolation of the epoxy resin by distillation, distillation fractions with lower boiling points ("lights") can be removed from the epoxy resin and recovered. The lights can comprise unreacted epihalohydrin and epoxidation by-products such as glycidol and 2-epoxypropyl ether. Recovered epihalohydrin can be recycled. Any unreacted diol can also be recovered and recycled. Depending upon the distillation conditions, the isolated epoxy resin can have a substantially reduced lights content, and comprises monoglycidyl ethers, diglycidyl ethers and oligomers.

In some embodiments, the method further comprises isolating the diglycidyl ether of Formula 1 from the epoxy resin. The diglycidyl ether can be isolated in high purity by distillation, for example by fractional vacuum distillation or wiped film distillation. The residue from fractional distillation after removal of lights, diol, monoglycidyl ethers, diglycidyl ethers, and other volatile components from the epoxy resin, can comprise a concentrated source of oligomer. This oligomer can be used as an epoxy resin itself, or can be used as a component to be blended, in a controlled amount,

with other epoxy resins.

When isolated from the epoxy resin, the diglycidyl ether can have a purity of greater than or equal to 85 area %, specifically greater than or equal to 90 area %, more specifically greater than or equal to 95 area %, still more specifically greater than or equal 98 area %, yet more specifically greater than or equal to 99 area %, and even more specifically greater than or equal to 99.5 area %, based on total peak area for the epoxy resin as determined by gas chromatography. The target purity depends upon the intended end use for the diglycidyl ether. The balance of components in the epoxy resin comprising the diglycidyl ether can comprise a monoglycidyl ether of Formula 5

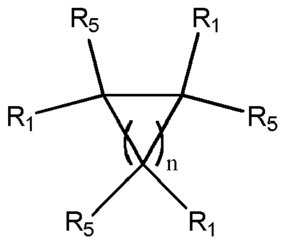

5

wherein n is 1, 2, or 3; each $R_1$ is independently hydrogen, $C_{1-12}$ alkyl, $C_{3-12}$ cycloalkyl, or $C_{6-24}$ aryl; and each $R_3$ is independently hydrogen, $C_{1-12}$ alkyl, $C_{3-12}$ cycloalkyl, $C_{6-24}$ aryl, hydroxyl, $C_{1-12}$ hydroxyalkyl, $C_{6-24}$ hydroxyaryl, or a glycidyl ether group, with the proviso that the monoglycidyl ether has one glycidyl ether group and one hydroxyl, $C_{1-12}$ hydroxyalkyl, or $C_{6-24}$ hydroxyaryl group; oligomers; and other minor components present at less than 5 area %. The diglycidyl ether isolated from the epoxy resin can be essentially free of oligomers. The oligomers are oligomeric reaction products of an epihalohydrin and the diol of Formula 3. The oligomers comprise greater than one cycloaliphatic ring of Formula 1 linked together by covalent bonds, and/or greater than two glycidyl ether groups. The term "essentially free of oligomers" means that the diglycidyl ether comprises less than or equal to 1 area %, specifically less than or equal to 0.5 area %, of oligomers, based on total peak area for the epoxy resin as determined by gas chromatography.

In some embodiments, the epoxy resin comprises 60 to 99 area % of the diglycidyl ether of Formula 1; 0 to 10 area % of the monoglycidyl ether of Formula 5; and 1 to 30 area % of oligomeric reaction products of an epihalohydrin and the diol of Formula 3; wherein all area percents are based on total peak area for the epoxy resin as determined by gas chromatography. In some embodiments, the epoxy resin comprises 75 to 89 area % of the diglycidyl ether; 1 to 5 area % of the monoglycidyl ether; and 10 to 20 area % of the oligomeric reaction products.

The epoxy resin and the diglycidyl ether isolated from the epoxy resin can be characterized by epoxide equivalent weight and weight percent oxirane oxygen content. A method for determination of epoxide equivalent and weight percent oxirane oxygen content is given by Jay, R.R., "Direct Titration of Epoxy Compounds and Aziridines", Analytical Chemistry, 36, 3, 667-668 (March, 1964). The epoxy resin and the diglycidyl ether isolated from the epoxy resin can have an oxirane oxygen content of greater than or equal to 85 %, specifically greater than or equal to 90 %, more specifically greater than or equal to 95 %, still more specifically greater than or equal to 98%, yet more specifically greater than or equal to 99%, and even more specifically greater than or equal to 99.5 %, of the theoretical oxirane oxygen content for the diglycidyl ether. The target oxirane oxygen content depends upon the intended end use for the epoxy resin. In some embodiments, the epoxy resin has an oxirane oxygen content of greater than or equal to 90 % of theoretical for the diglycidyl ether. The diglycidyl ether isolated from the epoxy resin can also have a an oxirane oxygen content of greater than or equal to 90 % of theoretical.

In some embodiments, the diglycidyl ether comprises cis- and trans-2,2,4,4-tetramethylcyclobutane-1,3-diglycidyl ether. When the diglycidyl ether comprises cis- and trans-2,2,4,4-tetramethylcyclobutane-1,3-diglycidyl ether, the theoretical epoxide equivalent weight is 128.22, and the theoretical oxirane oxygen content is 12.48 weight %. Thus, when the purified epoxy resin comprises cis- and trans-2,2,4,4-tetramethylcyclobutane-1,3-diglycidyl ether, the oxirane oxygen content can be greater than or equal to 10.6 weight % (85% of 12.48 weight %), greater than or equal to 11.2 weight % (90% of 12.48 weight %), specifically greater than or equal to 11.8 weight % (95% of 12.48 weight %), more specifically greater than or equal to 12.2 weight % (98% of 12.48 weight %), and still more specifically, greater than or equal to 12.3 weight % (99% of 12.48 weight %), and yet more specifically greater than or equal to 12.4 weight % (99.5% of 12.48 weight %). When the epoxy resin comprises cis- and trans-2,2,4,4-tetramethylcyclobutane-1,3-diglycidyl ether, the epoxide equivalent weight can be less than or equal to 150.8, specifically less than or equal to 142.5, more specifically less than or equal to 134.9, still more specifically less than or equal to 130.8, yet more specifically less than or equal to 129.5, and even more specifically less than or equal to 128.9. In some embodiments, the epoxy resin has an oxirane oxygen content of greater than or equal to 11.2 weight % and an epoxide equivalent weight of less than or equal to 142.5.

Advantageously, both the epoxy resin and the diglycidyl ether isolated from the epoxy resin can each have a low total chlorine content. Epoxy resins can be made by Lewis-acid catalyzed coupling of diols with epichlorohydrin. Stannous chloride is an example of a Lewis acid that can be used. Epoxy resins formed by this method can comprise

up to 5 weight % of chloride, based on the weight of the epoxy resin, and present as chloromethyl groups. In Comparative Example 6, the chloromethyl compounds of Formulae 6, 7, 8, and 9 were detected by GC-MS in a commercial sample of an epoxy resin made from cis- and trans-1,4-cyclohexanedimethanol by Lewis-acid catalyzed coupling. The compound of Formula 7 alone was present at greater than 80 area %, based on total peak area for the epoxy resin as determined by gas chromatography. In contrast, the epoxy resin of the present invention, and the diglycidyl ether isolated from the epoxy resin, can each have a total chlorine content of less than or equal to 2 weight %, specifically less than or equal to 1 weight %, more specifically less than or equal to 0.5 weight %, still more specifically less than or equal to 0.1 weight %, and yet more specifically less than or equal to 0.01 weight %. In some embodiments, the epoxy resin has a total chlorine content of less than or equal to 2 weight %. The diglycidyl ether isolated from the epoxy resin can also have a total chlorine content of less than or equal to 2 weight %. The epoxy resin and the diglycidyl ether isolated from the epoxy resin can each have a total chlorine content of essentially zero.

Advantageously, the epoxy resin can have a lower viscosity than an epoxy resin comprising the diglycidyl ether of cis- and trans-1,4-cyclohexanedimethanol instead of the diglycidyl ether of Formula 1. The viscosity of the epoxy resin and the diglycidyl ether isolated from the epoxy resin can be less than or equal to 60 centipoise (cP), specifically less than or equal to 40 cP, more specifically less than or equal to 25 cP, and still more specifically less than or equal to 15 cP, as determined on an I.C.I. Cone and Plate viscometer at 25 °C. The viscosity of the epoxy resin and the diglycidyl ether isolated from the epoxy resin can be 5 to 60 cP, specifically 5 to 40 cP, more specifically 5 to 20 cP, and still more specifically 5 to 15 cP, as determined on an I.C.I. Cone and Plate Viscometer at 25 °C. In some embodiments, the epoxy resin has a viscosity of less than or equal to 25 cP as determined on an I.C.I. Cone and Plate Viscometer at 25 °C. The diglycidyl ether can have a viscosity of less than or equal to 15 cP as determined on an I.C.I. Cone and Plate Viscometer at 25 °C.

The invention extends to curable compositions. Thus an embodiment is a curable epoxy resin composition comprising an epoxy resin comprising a diglycidyl ether of Formula 1

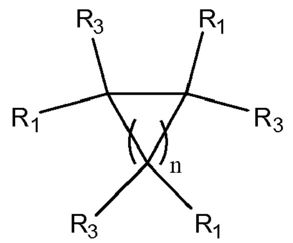

1

wherein n is 1, 2, or 3; each $R_1$ is independently hydrogen, $C_{1-12}$ alkyl, $C_{3-12}$ cycloalkyl, or $C_{6-24}$ aryl; and each $R_3$ is independently hydrogen, $C_{1-12}$ alkyl, $C_{3-12}$ cycloalkyl, $C_{6-24}$ aryl, or a glycidyl ether group, with the proviso that the glycidyl ether compound has two glycidyl ether groups; a curing agent; and optionally a curing catalyst. All of the above-described variations in the epoxy resin and the diglycidyl ether apply as well to the curable composition. For example, in some embodiments, the epoxy resin of the curable composition has an oxirane oxygen content of greater than or equal to 90 % of theoretical for the diglycidyl ether. The epoxy resin of the curable composition can have a total chlorine content of less than or equal to 2 weight %.

The curing agent comprises a polyfunctional reactant. The polyfunctional reactant comprises greater than two reactive hydrogen atoms, wherein reactive hydrogen atoms are those that are reactive with the epoxide groups and/or the secondary hydroxyl groups present in the epoxy resin or the diglycidyl ether. Examples of polyfunctional reactants are polyamines comprising primary and/or secondary amine groups, aminoalcohols, Mannich bases, polyamides, amidoamines (for example those obtained from aliphatic polyamines and dimerized or trimerized fatty acids), polyaminoimidazolines, polyphenols, polymercaptans, aliphatic, cycloaliphatic, or aromatic polycarboxylic acids, aliphatic, cycloaliphatic, or aromatic anhydrides, urea-formaldehyde resins, alkoxylated urea-formaldehyde resins, aniline-formaldehyde resins, melamine-formaldehyde resins, alkoxylated melamine-formaldehyde resins, phenol-formaldehyde resins, phenol-formaldehyde novolacs, phenol-formaldehyde resoles, cresol-formaldehyde novolacs, cresol-formaldehyde resoles, epoxy resin adducts, and a combination comprising one or more of the foregoing curing agents.

The curing agent comprises a polyfunctional reactant comprising greater than two reactive hydrogen atoms. Examples of polyfunctional reactants comprising greater than two reactive hydrogen atoms are 4-aminophenol, 2-aminophenol, m-xylenediamine, propane-1,3-diamine, 2,2-dimethyl-1,3-propanediamine (neopentanediamine), 2,5-dimethyl-2,5-hexanediamine, 1,12-dodecanediamine, meta-phenylene diamine, methylene dianiline, 4,4'-diaminobenzanilide, dicyandiamide, 4,4'-diaminostilbene, 4,4'-diamino-alpha-methylstilbene, sulfanilamide, diaminodiphenylsulfone, diethyltoluenediamine, t-butyltoluenediamine, bis-4-aminocyclohexylamine, bis-(4-aminocyclohexyl)methane, bis-(4-amino-3-methylcyclohexyl)methane, 2,2-bis-(4-aminocyclohexyl)propane, 3-aminomethyl-3,5,5-trimethylcyclohexylamine (isophoronediamine), 1,3-diaminocyclohexane, hexamethylenediamine, 1,2-diaminocyclohexane, ethylene diamine, diethylene triamine, triethylene tetraamine, hydroxyethyl diethylene triamine, triethylenetetramine, tetraethylenepentaamine, pentaethylenehexaamine, tris-3-aminopropylamine, aminoethylpiperazine, pyromellitic anhydride, and combinations of one or more of the foregoing polyfunctional reactants.

In some embodiments, the curing agent can be self-reactive, that is able to react with itself. Examples of self-reactive curing agents are urea-formaldehyde resins, alkoxylated urea-formaldehyde resins, aniline-formaldehyde resins, melamine-formaldehyde resins, alkoxylated melamine-formaldehyde resins, phenol-formaldehyde resins, phenol-formaldehyde novolacs, phenol-formaldehyde resoles, cresol-formaldehyde novolacs, cresol-formaldehyde resoles, and a combination comprising one or more of the foregoing. In some embodiments, the self-reactive curing agent is a resole, a melamine-formaldehyde resin, or a combination of both.

In some embodiments, the curing agent comprises a polyamine curing agent. The polyamine can comprise one or more of primary, secondary, and tertiary nitrogen atoms. Specific examples of polyamine curing agents are diethylenetriamine (DETA), 3-aminomethyl-3,5,5-trimethylcyclohexylamine (isophoronediamine, or IPDA), or a combination of both. The curing agent can comprise Mannich base, for example POLYPOX H013, having an amine hydrogen equivalent weight (AHEW) of 90, available from Dow Chemical, and CARDOLITE LITE 2001LV, a Mannich base made from a cardanol-formaldehyde resin, with an AHEW of 125, available from Cardolite, or a combination comprising both.

The curing agent can be present in an amount sufficient to cure the epoxy resin. For example, the curing agent can be present in an amount wherein the equivalent ratio of reactive hydrogen atoms in the curing agent to epoxide groups in the epoxy resin is 0.70:1 to 1.5:1, specifically 0.95:1 to 1.05:1 equivalents of reactive hydrogen atom in the curing agent per equivalent of epoxide group in the epoxy resin.

In some embodiments, the curable composition comprises a curing catalyst. Curing catalysts are substances that promote the curing of the epoxy resin or diglycidyl ether. The curing catalyst can comprise a Lewis base, a Lewis acid, or a quaternary phosphonium salt. Examples of Lewis bases are aromatic tertiary amines, such as 2-dimethylaminomethylphenol (DMAP), and 2,4,6-tris(dimethylaminomethyl)phenol (TDAMP), imidazoles, such as 2-methylimidazole and 2-phenylimidazole, cyclic amidines, such as 2-phenylimidazoline, substituted ureas, such as 3-phenyl-1,1-dimethyl urea, the reaction product of toluene diisocyanate with dimethylamine, and a combination comprising one or more of the foregoing. Examples of Lewis acids are boron trifluoride, boron trifluoride etherate, aluminum chloride, ferric chloride, zinc chloride, silicon tetrachloride, stannic chloride, titanium tetrachloride, antimony trichloride, monoethanolamine complex, boron trifluoride triethanolamine complex, boron trifluoride piperidine complex, pyridine-borane complex, diethanolamine borate, zinc fluoroborate, metallic acylates such as stannous octoate or zinc octoate, and a combination comprising one or more of the foregoing.

The curing catalyst can be present in an amount which will effectively promote cure of the epoxy resin or diglycidyl ether. The curing catalyst can be employed in an amount of 0.0001 to 5 weight %, specifically 0.01 to 2 weight %, based on the total weight of the epoxy resin or diglycidyl ether and the curing agent.

In some embodiments, the curable composition comprises an additive selected from a solvent, an accelerator, a diluent (including non-reactive diluents, reactive epoxide diluents, and reactive non-epoxide diluents), a rheology modifier (such as a flow modifier and a thickener), a reinforcing material, a filler, a pigment, a dye, a mold release agent, a wetting agent, a stabilizer, a fire retardant agent, a surfactant, an acid (such as phosphoric acid), a base, a chain termination agent, a resin stabilizer, a defoamer, a processing aid, another resin, a plasticizer, a catalyst de-activator, a lubricant, an adhesion promoter, a slip agent, an anti-cratering agent, a dispersant comprising acid-functional or non-ionic surfactants, and a combination comprising one or more of the foregoing. The additive can comprise, for example, a wetting agent such as BYK-310, a polyester modified polydimethylsiloxane, available from BYK USA Inc.

Each additive can be present in an effective amount for its intended purpose. For example, the pigment and extender can be added in an amount which will provide the cured composition with the desired color and hiding properties. Pigments and extenders can be present in an amount of up to 90 weight %, specifically 1 to 85 weight %, more specifically 3 to 75 weight %, and still more specifically 5 to 65 weight %, based on the total weight of the curable composition. Other additives, for example rheology modifiers, dispersants, and wetting agents can be present in an amount of greater than 0 to 20 weight %, specifically 0.5 to 5 weight %, and more specifically 0.5 to 3 weight % based on the total weight of the curable composition.

In some embodiments, the curable composition comprises a solvent (also referred to as the curing solvent). Examples of solvents are aliphatic and aromatic hydrocarbons, halogenated aliphatic hydrocarbons, aliphatic ethers, aliphatic nitriles, cyclic ethers, glycols, glycol ethers, esters, ketones, alcohols, amides, sulfoxides, or a combinations comprising one or more of the foregoing classes of solvents. Specific examples of solvent are pentane, hexane, octane, toluene, xylene, cyclohexanone, methylethylketone, methylisobutylketone, ethanol, isopropyl alcohol, n-butanol, ethylene glycol, propylene glycol, N,N-dimethylformamide, dimethylsulfoxide, diethyl ether, tetrahydrofuran, 1,4-dioxane, dichloromethane, chloroform, ethylene dichloride, methyl chloroform, ethylene glycol dimethyl ether, diethylene glycol methyl ether, diethylene glycol dimethyl ether (diglyme), monobutyl ethylene glycol ether, dipropylene glycol methyl ether, N-methylpyrrolidinone, N,N-dimethylacetamide, acetonitrile, sulfolane, and a combination comprising one or more of the foregoing.

In some embodiments, the curable composition comprises a diluent, including reactive and non-reactive diluents. Examples of diluents are dibutyl phthalate, dioctyl phthalate, styrene, styrene oxide, allyl glycidyl ether, phenyl glycidyl ether, butyl glycidyl ether, vinylcyclohexene oxide, neopentylglycol diglycidyl ether, butanediol diglycidyl ether, hexanediol diglycidyl ether, diethylene glycol diglycidyl ether, dipropylene glycol diglycidyl ether, poly(propylene glycol) diglycidyl ether, thiodiglycol diglycidyl ether, maleic anhydride, ε-caprolactam, butyrolactone, acrylonitrile, and a combination comprising one or more of the foregoing.

In some embodiments, the curable composition comprises a rheology modifier, such as a flow modifier or a thickener. The rheology modifier can be present in an amount of 0.1 to 10 weight %, specifically 0.5 to 6 weight %, more specifically 0.5 to 4 weight %, based on the total weight of the curable composition.

In some embodiments, the curable composition comprises a reinforcing material. The reinforcing material can comprise natural and synthetic fibers in the form of woven fabric, mat, monofilament, multifilament, unidirectional fiber, roving, random fiber or filament, whisker, hollow sphere, or combinations comprising one or more of the foregoing. Examples of reinforcing material are glass, carbon, ceramics, nylon, rayon, cotton, aramid, graphite, polyalkylene terephthalates, polyethylene, polypropylene, polyesters, or a combination comprising one or more of the foregoing.

In some embodiments, the curable composition comprises a filler. Examples of filler are inorganic oxides, talc, wollastonite, ceramic microspheres, plastic microspheres, glass microspheres, inorganic whiskers, calcium carbonate, or a combination comprising one or more of the foregoing. The filler can be present in an amount of 0.1 to 95 weight %, specifically 10 to 80 weight %, more specifically 40 to 60 weight % based on the total weight of the curable composition.

In some embodiments, the curable composition further comprises an auxiliary epoxy resin in addition to the epoxy resin comprising a diglycidyl ether of Formula 1, the curing agent, and the optional curing catalyst. The auxiliary epoxy resin is different than the epoxy resin comprising the diglycidyl ether. Any epoxy resin can serve as the auxiliary epoxy resin. Examples of auxiliary epoxy resins include those described by the Formula 6

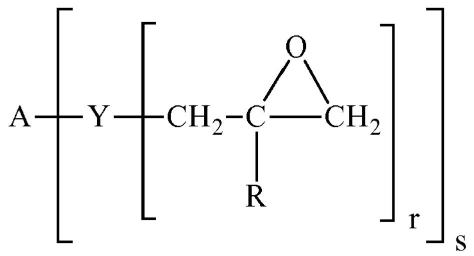

6

wherein A is a an organic or inorganic radical of valence n, Y is oxygen or nitrogen, r is 1 or 2 and consistent with the valence of A, R is hydrogen or methyl, and s is 1 to about 1000, specifically 1 to 8, more specifically 2 or 3 or 4.

Classes of auxiliary epoxy resins include, for example, aliphatic epoxy resins, cycloaliphatic epoxy resins, aromatic epoxy resins including bisphenol A epoxy resins, bisphenol F epoxy resins, phenol novolac epoxy resins, cresol-novolac epoxy resins, biphenyl epoxy resins, naphthalene epoxy resins, dicyclopentadiene-type epoxy resins, divinylbenzene dioxide, 2-glycidylphenylglycidyl ether, and a combination comprising one or more of the foregoing.

Auxiliary epoxy resins include those having the following formulae

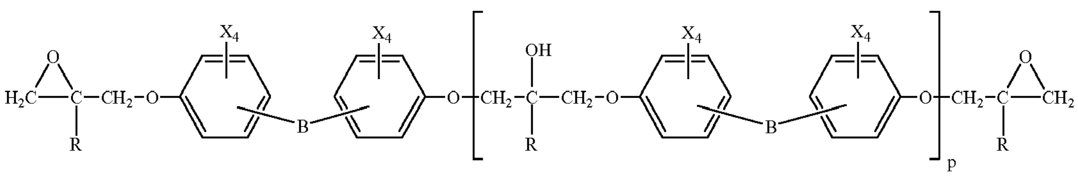

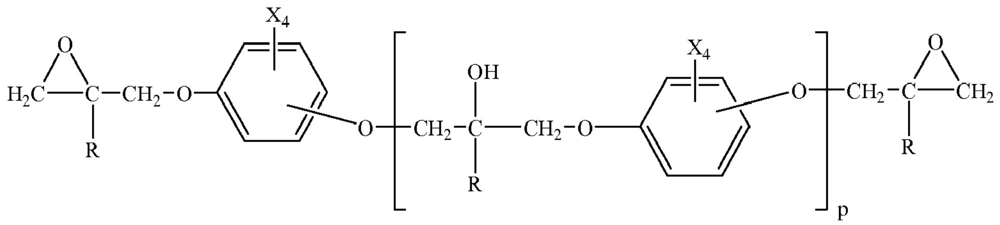

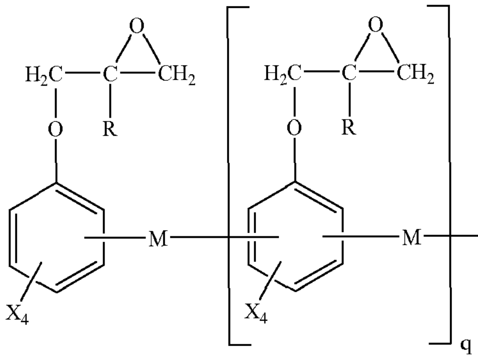

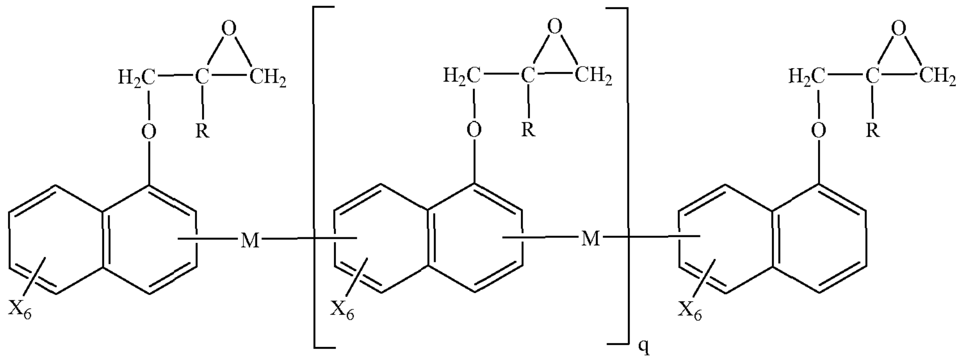

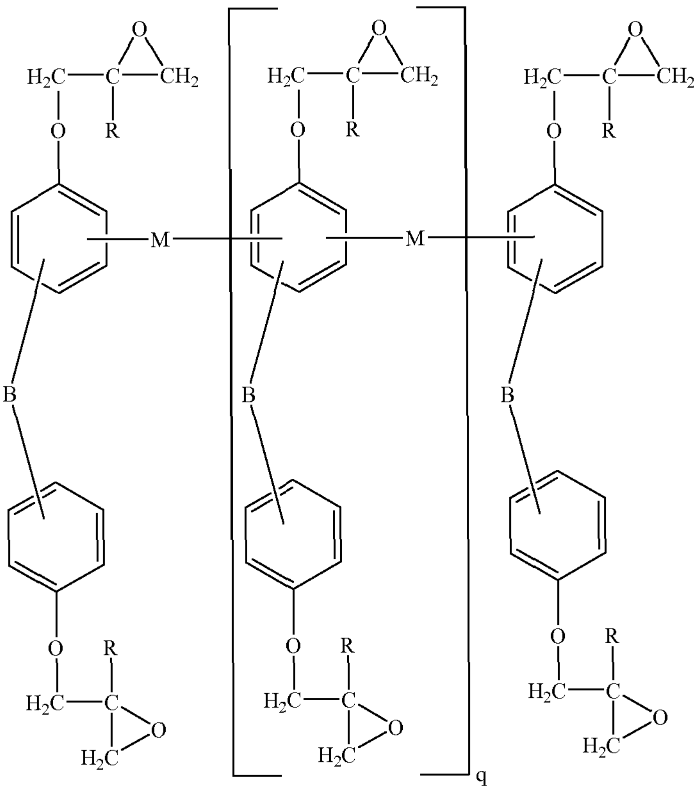

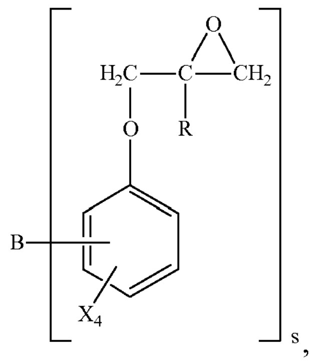

wherein each occurrence ofR is independently hydrogen or methyl; each occurrence of M is independently $C_1$-$C_{18}$ hydrocarbylene optionally further comprising a member or members selected from oxirane, carboxy, carboxamide, ketone, aldehyde, alcohol, halogen, nitrile; each occurrence of X is independently hydrogen, chloro, fluoro, bromo, $C_1$-$C_{18}$ hydrocarbyl optionally further comprising a member or members selected from carboxy, carboxamide, ketone, aldehyde, alcohol, halogen, and nitrile; each occurrence of B is independently a carbon-carbon single bond, $C_1$-$C_{18}$ hydrocarbyl, $C_1$-$C_{12}$ hydrocarbyloxy, $C_1$-$C_{12}$ hydrocarbylthio, carbonyl, sulfide, sulfonyl, sulfinyl, phosphoryl, silane, or such groups further comprising a member or members selected from carboxyalkyl, carboxamide, ketone, aldehyde, alcohol, halogen, and nitrile; s is 1 to about 20; and each occurrence of p and q is independently 0 to about 20.

Specific examples of auxiliary epoxy resins include those produced by the reaction of epichlorohydrin or epibromohydrin with a phenolic compound. Examples of phenolic compounds include resorcinol, catechol, hydroquinone, 2,6-dihydroxynaphthalene, 2,7-dihydroxynapthalene, 2-(diphenylphosphoryl)hydroquinone, bis(2,6-dimethylphenol) 2,2'-biphenol, 4,4-biphenol, 2,2',6,6'-tetramethylbiphenol, 2,2',3,3',6,6'-hexamethylbiphenol, 3,3',5,5'-tetrabromo-2,2'6,6'-tetramethylbiphenol, 3,3'-dibromo-2,2',6,6'-tetramethylbiphenol, 2,2',6,6'-tetramethyl-3,3',5-tribromobiphenol, 4,4'-isopropylidenediphenol (bisphenol A), 4,4'-isopropylidenebis(2,6-dibromophenol) (tetrabromobisphenol A), 4,4'-isopropylidenebis(2,6-dimethylphenol) (tetramethylbisphenol A), 4,4'-isopropylidenebis(2-methylphenol), 4,4'-isopropylidenebis(2-allylphenol), 4,4'-(1,3-phenylenediisopropylidene)bisphenol (bisphenol M), 4,4'-isopropylidenebis(3-phenylphenol), 4,4'-(1,4-phenylenediisoproylidene)bisphenol (bisphenol P), 4,4'-ethylidenediphenol (bisphenol E), 4,4'-oxydiphenol, 4,4'-thiodiphenol, 4,4'-thiobis(2,6-dimethylphenol), 4,4'-sulfonyldiphenol, 4,4'-sulfonylbis(2,6-dimethylphenol) 4,4'-sulfinyldiphenol, 4,4'-hexafluoroisoproylidene)bisphenol (Bisphenol AF), 4,4'-(1-phenylethylidene)bisphenol (Bisphenol AP), bis(4-hydroxyphenyl)-2,2-dichloroethylene (Bisphenol C), bis(4-hydroxyphenyl)methane (Bisphenol-F), bis(2,6-dimethyl-4-hydroxyphenyl)methane, 4,4'-(cyclopentylidene)diphenol, 4,4'-(cyclohexylidene)diphenol (Bisphenol Z), 4,4'-(cyclododecylidene)diphenol, 4,4'-(bicyclo[2.2.1]heptylidene)diphenol, 4,4'-(9H-fluorene-9,9-diyl)diphenol, 3,3-bis(4-hydroxyphenyl)isobenzofuran-1(3H)-one, 1-(4-hydroxyphenyl)-3,3-dimethyl-2,3-dihydro-1H-inden-5-ol, 1-(4-hydroxy-3,5-dimethylphenyl)-1,3,3,4,6-pentamethyl-2,3-dihydro-1H-inden-5-ol, 3,3,3',3'-tetramethyl-2,2',3,3'-tetrahydro-1,1'-spirobi[indene]-5,6'-diol (spirobiindane), dihydroxybenzophenone (bisphenol K), tris(4-hydroxyphenyl)methane, tris(4-hydroxyphenyl)ethane, tris(4-hydroxyphenyl)propane, tris(4-hydroxyphenyl)butane, tris(3-methyl-4-hydroxyphenyl)methane, tris(3,5-dimethyl-4-hydroxyphenyl)methane, tetrakis(4-hydroxyphenyl)ethane, tetrakis(3,5-dimethyl-4-hydroxyphenyl)ethane, bis(4-hydroxyphenyl)phenylphosphine oxide, dicyclopentadienylbis(2,6-dimethyl phenol), dicyclopentadienyl bis(2-methylphenol), dicyclopentadienyl bisphenol, and a combination thereof comprising one or more of the foregoing. In some embodiments, the auxiliary epoxy resin comprises a bisphenol A diglycidyl ether epoxy resin (for example, a diglycidyl ether of 2,2-bis(4-hydroxyphenyl)propane).

Examples of other auxiliary epoxy resins include *N*-glycidyl phthalimide, *N*-glycidyl tetrahydrophthalimide, phenyl glycidyl ether, p-butylphenyl glycidyl ether, styrene oxide, neohexene oxide, bisphenol S-type epoxy compounds, phenol novolac-type epoxy compounds, ortho-cresol novolac-type epoxy compounds, adipic acid diglycidyl ester, sebacic acid diglycidyl ester, and phthalic acid diglycidyl ester. Also included are the glycidyl ethers of phenolic resins such as the glycidyl ethers of phenol-formaldehyde novolac, alkyl substituted phenol-formaldehyde resins including cresol-formaldehyde novolac, *t*-butylphenol-formaldehyde novolac, *sec*-butylphenol-formaldehyde novolac, *tert*-octylphenol-formaldehyde novolac, cumylphenol-formaldehyde novolac, decylphenol-formaldehyde novolac. Other useful auxiliary epoxy resins are the glycidyl ethers of bromophenol-formaldehyde novolac, chlorophenol-formaldehyde novolac, phenol-bis(hydroxymethyl)benzene novolac, phenol-bis(hydroxymethylbiphenyl) novolac, phenol-hydroxybenzaldehyde novolac, phenol-dicyclopentadiene novolac, naphthol-formaldehyde novolac, naphthol-bis(hydroxymethyl)benzene novolac, naphthol-bis(hydroxymethylbiphenyl) novolac, naphthol-hydroxybenzaldehyde novolac, naphthol-dicyclopentadiene novolac, and a combination thereof comprising one or more of the foregoing.

Examples of other auxiliary epoxy resins include the polyglycidyl ethers of polyhydric aliphatic alcohols. Examples of the polyhydric aliphatic alcohols are ethylene glycol, tetramethyleneglycol, 1,4-butanediol, 1,6-hexanediol, polyalkylene glycols such as polyethylene glycol and polypropylene glycol, polytetramethylene glycol, glycerol, trimethylolpropane, 2,2-bis(4-hydroxycyclohexyl)propane, pentaerythritol, and a combination comprising one or more of the foregoing.

Examples of other auxiliary epoxy resins are polyglycidyl esters which are obtained by reacting epichlorohydrin or similar epoxy compounds with an aliphatic, cycloaliphatic, or aromatic polycarboxylic acid, such as oxalic acid, adipic acid, glutaric acid, phthalic, isophthalic, terephthalic, tetrahydrophthalic or hexahydrophthalic acid, 2,6-naphthalenedicarboxylic acid, and dimerized fatty acids. Specific examples are diglycidyl terephthalate and diglycidyl hexahydrophthalate. Moreover, polyepoxide compounds which contain the epoxide groups in random distribution over the polymer chain, and which can be prepared by emulsion copolymerization using olefinically unsaturated compounds that contain these epoxide groups, such as, for example, glycidyl esters of acrylic or methacrylic acid, can be employed with advantage in some cases.

Examples of other auxiliary epoxy resins include those based on heterocyclic ring systems, for example hydantoin epoxy resins, triglycidyl isocyanurate and its oligomers, triglycidyl-p-aminophenol, triglycidyl-p-aminodiphenyl ether, tetraglycidyldiaminodiphenylmethane, tetraglycidyldiaminodiphenyl ether, tetrakis(4-glycidyloxyphenyl)ethane, urazole epoxides, uracil epoxides, and oxazolidinone-modified epoxy resins. Other examples are polyepoxides based on aromatic amines, such as aniline, for example *N,N*-diglycidylaniline, diaminodiphenylmethane, *N,N*-dimethylaminodiphenylmethane and *N,N*-dimethylaminodiphenyl sulfone; and cycloaliphatic epoxy resins such as 3,4-epoxycyclohexylmethyl-3,4-epoxycyclohexane carboxylate, 4,4'-(1,2-epoxyethyl)biphenyl, 4,4'-di(1,2-epoxyethyl)diphenyl ether, and bis(2,3-epoxycyclopentyl)ether.

Another class of auxiliary epoxy resins is oxazolidinone-modified epoxy resins. Epoxy resins of this kind are disclosed, for example, in Angew. Makromol. Chem., vol. 44, (1975), pages 151-163, and U.S. Patent No. 3,334,110 to Schramm. A specific example is the reaction product of bisphenol A diglycidyl ether with diphenylmethane diisocyanate in the presence of an appropriate accelerator.

Another class of auxiliary epoxy resins is oligomers prepared by condensation of an epoxy resin with a phenol such as a bisphenol. An example is an oligomeric diglycidyl ether prepared by the condensation of bisphenol A with a bisphenol A diglycidyl ether. A phenol dissimilar to the one from which the epoxy resin is derived can be used. For example tetrabromobisphenol A can be condensed with bisphenol A diglycidyl ether to produce an oligomeric diglycidyl ether containing halogens.

These and other auxiliary epoxy resins as well as curing agents and catalysts are described in Henry Lee and Kris Neville, "Handbook of Epoxy Resins" McGraw-Hill Book Company, 1967, and Henry Lee "Epoxy Resins", American Chemical Society, 1970.

Specific auxiliary epoxy resins are the diglycidyl ethers of 4,4'-isopropylidenediphenol (bisphenol A); 4,4'-dihydroxydiphenylmethane (bisphenol F); 4,4'-dihydroxydiphenylsulfone; 4,4'-dihydroxydiphenyl oxide; 4,4'-dihydroxydiphenylsulfide; 1,4-dihydroxybenzene (hydroquinone); 1,3-dihydroxybenzene (resorcinol); the polyglycidyl ethers of phenol-formaldehyde condensation products (novolacs), dicyclopentadiene-phenol condensation products, and tris(hydroxyphenyl)methane; and a combination comprising one or more of the foregoing.

The auxiliary epoxy resin can be a solid at room temperature. Thus, in some embodiments, the epoxy resin has a softening point of 25 to 150 °C. Softening points can be determined according to ASTM E28-99(2004), "Standard Test Methods for Softening Point of Resins Derived from Naval Stores by Ring-and-Ball Apparatus". The auxiliary epoxy resin can also be a liquid or a softened solid at room temperature. Thus, in some embodiments, the auxiliary epoxy resin has a softening point less than 25°C.

In some embodiments, the curable composition comprises the auxiliary epoxy resin in an amount of 0 to 99 weight %, specifically 1 to 99 weight %, more specifically 10 to 90 weight %, still more specifically 40 to 85 weight %, and yet more specifically 50 to 80 weight %, based on the total weight of the curable composition.

The curable composition can be cured under known conditions to form a film, a coating, a foam or a solid. Thus a method of curing a curable composition comprises reacting an epoxy resin comprising a diglycidyl ether of Formula 1

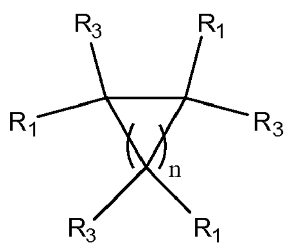

1

wherein n is 1, 2, or 3; each $R_1$ is independently hydrogen, $C_{1-12}$ alkyl, $C_{3-12}$ cycloalkyl, or $C_{6-24}$ aryl; and each $R_3$ is independently hydrogen, $C_{1-12}$ alkyl, $C_{3-12}$ cycloalkyl, $C_{6-24}$ aryl, or a glycidyl ether group, with the proviso that the

diglycidyl ether has two glycidyl ether groups with a curing agent, optionally in the presence of a curing catalyst. The method of curing the curable composition can comprise gravity casting, vacuum casting, automatic pressure gelation (APG), vacuum pressure gelation (VPG), infusion, filament winding, lay up injection, transfer molding, and forming a prepreg. When the curable composition is a coating composition, it can be cured after applying the curable composition to a substrate by any known coating method, such as roller coating, dip coating, spray coating, and brush coating.

All of the above-described variations in the curable composition, including variations in the epoxy resin, the diglycidyl ether, the curing agent, and the curing catalyst apply as well to the method of curing the curable composition. For example, the curing agent can be reacted in an amount comprising 0.70:1 to 1.5:1, specifically 0.95:1 to 1.05:1, equivalents of reactive hydrogen atom in the curing agent per equivalent of epoxide group in the epoxy resin or purified diglycidyl ether. The curing temperature can vary widely depending upon the specific curable composition. For example, the curing temperature can be 0 to 300 °C, specifically 20 to 250 °C. The heating can occur in stages where the heat in increased gradually with time. The curing can occur with or without agitation. The curing reaction can be carried out at a pressure of 0.01 to 1000 bar (0.001 to 100 MPa), specifically 0.1 to 100 bar (0.01 to 10 MPa, and more specifically 0.5 to 10 bar (0.05 to 1 MPa).

The curing time can be such that either full or partial curing to a B-stage composition is achieved. In the case of partial curing, for example a B-stage composition, the B-stage composition can be fully cured at a later time. The optimal curing time can vary widely depending upon the specific curable composition, the curing temperature, and whether a B-stage composition is desired. For example, the curing time can be 2 seconds to 14 days, specifically 5 seconds to 7 days.

A cured composition is formed by the method of curing described above. Thus, a cured composition comprises a reaction product of an epoxy resin comprising a diglycidyl ether of Formula 1

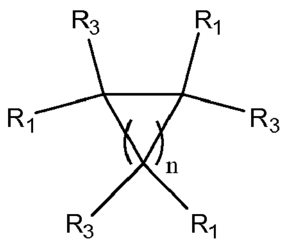

1

wherein n is 1, 2, or 3; each $R_1$ independently is hydrogen, $C_{1-12}$ alkyl, $C_{3-12}$ cycloalkyl, or $C_{6-24}$ aryl; each $R_3$ independently is hydrogen, $C_{1-12}$ alkyl, $C_{3-12}$ cycloalkyl, $C_{6-24}$ aryl, or a glycidyl ether group, with the proviso that the diglycidyl ether has two glycidyl ether groups; and a curing agent. All of the above-described variations in the curable composition, including variations in the epoxy resin, diglycidyl ether, and curing agent, apply as well to the cured composition. For example, in some embodiments, the epoxy resin of the cured composition has an oxirane oxygen content of greater than or equal to 90 % of theoretical for the diglycidyl ether. The epoxy resin of the cured composition can have a total chlorine content of less than or equal to 2 weight %.

The cured composition can have a glass transition temperature of greater than equal to 30 °C, specifically greater than or equal to 45 °C, more specifically greater than or equal to 60 °C, and still more specifically greater than or equal to 80 °C. The cured composition can have a glass transition temperature of 30 to 120 °C, specifically 45 to 100 °C. In some embodiments, the cured composition has a higher glass transition temperature than an analogous cured composition comprising the diglycidyl ether of cis- and trans-1,4-cyclohexanedimethanol or cis- and trans-1,3- and 1,4-cyclohexanedimethanol instead of the diglycidyl ether of Formula 1.

The curable composition can be used to form articles. Thus in some embodiments, an article comprises a reaction product of an epoxy resin comprising a diglycidyl ether of Formula 1

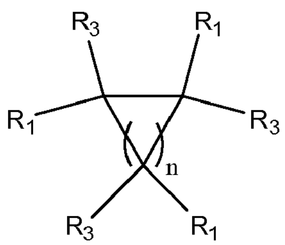

1

wherein n is 1, 2, or 3; each $R_1$ independently is hydrogen, $C_{1-12}$ alkyl, $C_{3-12}$ cycloalkyl, or $C_{6-24}$ aryl; and each $R_3$ independently is hydrogen, $C_{1-12}$ alkyl, $C_{3-12}$ cycloalkyl, $C_{6-24}$ aryl, or a glycidyl ether group, with the proviso that the

glycidyl ether compound has two glycidyl ether groups; and a curing agent. All of the above-described variations in the curable composition, including variations in the epoxy resin, diglycidyl ether, and curing agent, apply as well to the article. The article can be a coating, an electrical or structural laminate, an electrical or structural composite, a filament winding, a molding, a casting, a potting, an encapsulation, or a capillary underfill in an electronic device. The curable composition is ideally suited for capillary underfill in electronic devices, not only due to its low viscosity, but also due to one or more of its low to non-existent chloride content and high reactivity, and the relatively high glass transition temperature of the cured composition.

In some embodiments, the curable composition is a coating composition. The curable composition can be a protective or maintenance coating, which is cured at low temperature, or a factory-applied coating, which is cured at high temperature. The coating composition can be applied to a substrate by spin coating, flow coating, dip coating, roll coating, spray coating, curtain coating, blade techniques, and the like. After the coating composition has been applied to the substrate, it can be cured. In some embodiments, for example for a general protective or maintenance coating, the coating composition is cured at low temperature, specifically at -10 to 50 °C, more specifically 0 to 40 °C, and still more specifically 20 to 30 °C, and for up to 14 days or more, specifically 1 day to 7 days. In other embodiments, for example a factory-applied coating, the curable composition is cured at high temperature, specifically 50 to 300 °C, more specifically 80 to 300 °C, still more specifically 100 to 250 °C, and yet more specifically 100 to 220 °C, and for several seconds to several minutes, specifically 2 seconds to 30 minutes. The cured coatings exhibit one or more of solvent resistance, moisture resistance, abrasion resistance, and weatherability.

The Applicants have surprisingly found that reducing the ring size of the cycloalkyl group of the diglycidyl ether from 6 as in CDHM DGE, to 3 to 5, results in cured epoxy resins with increased glass transition temperatures. The Applicants have further found that epoxy resins comprising the diglycidyl ethers, and purified diglycidyl ethers isolated from the epoxy resins, have surprisingly low viscosity. The low viscosity of the purified diglycidyl ether makes it especially attractive as a reactive epoxy resin diluent, especially for use in coatings, electronics, and electrical laminate applications. The high reactivity and inherently low to non-existent chloride content of the diglycidyl ethers, and the relatively high glass transition temperature of cured compositions comprising the diglycidyl ethers, provide additional benefits for coatings, electronics, and electrical laminate applications.

The Applicants have also developed methods for making and purifying the diglycidyl ethers, and have surprisingly found that the diglycidyl ethers can be obtained in very high purity by these methods. Moreover, the methods provide unexpected high selectivity for making the diglycidyl ether over chloromethylated by-products and oligomers.

The following examples further illustrate the present invention in detail but are not to be construed to limit the scope thereof.

## EXAMPLES

Standard abbreviations used in the detailed description, including the examples and comparative examples are summarized in Table 1.

Table 1

| Analytical | |
|---|---|
| AHEW | Amine hydrogen equivalent weight |
| cc | Cubic centimeters |
| cP | Centipoise |
| DI | Deionized |
| DMA | Dynamic mechanical analysis |
| DSC | Differential scanning calorimetry |
| EEW | Epoxide equivalent weight (grams of resin / epoxide equivalent) |
| eq | Equivalent(s) |
| g | Gram(s) |
| GC | Gas chromatograph, gas chromatographic |
| hr | Hour(s) |
| Hz | Hertz |

(continued)

| Analytical | |
|---|---|
| in | Inch(es) |
| J | Joule(s) |
| L | Liter(s) |
| LPM | Liter(s) per minute |
| m | Meter(s) |
| meq | Milliequivalent(s) |
| min | Minutes |
| mL | Milliliter(s) |
| mm | Millimeter(s) |
| mN | Millinewton(s) |
| MS | Mass spectrometry, mass spectrometric |
| rpm | Revolution(s) per minute |
| sec | Seconds |
| Tg | Glass transition temperature |
| wt | Weight |
| w/v | Weight by volume |
| μm | Micrometer(s) |
| °C | Degrees Celsius |
| Materials | |
| CHDM | Isomeric cyclohexanedimethanols |
| CHDM MGE | Monoglycidyl ether of isomeric cyclohexanedimethanols |
| CHDM DGE | Diglycidyl ether of isomeric cyclohexanedimethanols |
| DETA | Diethylenetriamine |
| IPDA | Isophoronediamine |
| MEK | Methylethylketone |
| PTFE | Polytetrafluoroethylene |
| TMCBD | cis- and trans-2,2,4,4-tetramethylcyclobutane-1,3-diol |
| TMCBD MGE | Monoglycidyl ether of cis- and trans-2,2,4,4-tetramethylcyclobutane-1,3-diol |
| TMCBD DGE | Diglycidyl ether of cis- and trans-2,2,4,4-tetramethylcyclobutane-1,3-diol |

In the following examples and comparative examples, standard analytical equipment and methods were used as described below:

Gas Chromatographic (GC) Analysis

In the general method, a Hewlett Packard 5890 Series II Plus gas chromatograph was employed using a DB-1 capillary column (61.4 m by 0.25 mm with a 0.25 micrometer film thickness, Agilent). The column was maintained in the chromatograph oven at a 50 °C initial temperature. Both the injector inlet and flame ionization detector were maintained at 300 °C. Helium carrier gas flow through the column was maintained at 1.1 mL/min. For the analyses of the epoxy resins during synthesis, from rotary evaporation and from distillation, an initial oven temperature of 50 °C, with heating at 12 °C/min to a final oven temperature of 300 °C, was employed. Under these conditions, all of the components were eluted within the 50-min total time given for the analysis. The GC results for each component are expressed in area %,

wherein area % refers to the peak area for the given component divided by the total peak area and multiplied by 100.

Samples for GC analysis during synthesis were prepared by collection of a 0.5 mL aliquot of the slurry product from the epoxidation reaction and addition to a vial containing 1 mL of acetonitrile. After shaking to mix, a portion of the slurry in acetonitrile was loaded into a 1 mL syringe (Norm-Ject, all polypropylene / polyethylene, Henke Sass Wolf GmBH) and passed through a syringe filter (Acrodisc CR 13 with 0.2 μm PTFE membrane, Pall Corporation, Gelman Laboratories) to remove any insoluble debris.

I.C.I. Cone and Plate Viscosity

Viscosity was determined on an I.C.I. Cone and Plate Viscometer Viscosity (model VR-4540) at 25 °C. In the method, the viscometer equipped with a 0-40 poise spindle (model VR-4140) and equilibrated to 25 °C was calibrated to zero then the sample applied and held 2 min with viscosity then checked and the reading taken after 15 seconds. Five to six duplicate viscosity tests were completed using a fresh aliquot of the particular product being tested. The individual measurements were averaged.

Percent Epoxide/Epoxide Equivalent Weight (EEW) Analysis

A modification of the standard titration method, that of Jay, R.R., "Direct Titration of Epoxy Compounds and Aziridines", Analytical Chemistry, 36, 3, 667-668 (March, 1964), was used to determine percent epoxide in the various epoxy resins. In the present adaptation of this method, the weighed sample (sample weight ranges from 0.15-0.20 g, a scale with 4 decimal place accuracy was used) was dissolved in dichloromethane (15 mL) followed by the addition of tetraethylammonium bromide solution in acetic acid (15 mL). The resultant solution treated with 3 drops of crystal violet indicator (0.1 % weight by volume (w/v) in acetic acid) was titrated with 0.1 Normal (N) perchloric acid in acetic acid on a Metrohm 665 Dosimat titrator (Brinkmann). Titration of a blank consisting of dichloromethane (15 mL) and tetraethylammonium bromide solution in acetic acid (15 mL) provided correction for any solvent background. Percent epoxide and EEW were calculated using the following equations:

$$\%\ \text{Epoxide} = \frac{[(\text{mL titrated sample}) - (\text{mL titrated blank})]\ (0.4303)}{(\text{g sample titrated})}$$

$$\text{EEW} = 4303\ /\ (\%\ \text{epoxide})$$

Differential Scanning Calorimetry (DSC)

For analysis (1) of curing of the thermosettable blends of a DGE with a curing agent and (2) of the $T_g$ of a cured sample, a DSC 2910 Modulated DSC (TA Instruments) was employed. A heating rate of 7 °C/min from 0 °C to 250 °C or 300 °C was used under a stream of nitrogen flowing at 35 cc/min. Each sample analyzed for curing was contained in an aluminum pan and loosely covered (not sealed) with an aluminum lid. Each cured sample for analysis of $T_g$ was contained in an open aluminum pan. The respective sample weight tested is given with the results obtained.

Thickness Measurement

Thickness was measured on dry coatings using a BYK MPOR USB coating thickness gauge. The gauge was zeroed on a bare panel (aluminum) before measuring coatings. Pencil hardness

Pencil hardness test was conducted according to ASTM D3363-06. The gauge hardness, the hardest pencil that will leave the film uncut, was reported.

Crosshatch adhesion test

The crosshatch adhesion was measured according to ASTM D3359-09. The "B" method was used for coatings less than 5 mils thick. In this test, a square lattice pattern cut with a razor giving 10 cuts in each direction with 1 or 2 mm distance between neighboring cuts. Pressure-sensitive double coated paper tape (3M No. 410) is applied over the lattice and then removed away sharply in a direction perpendicular to the surface of the coated sample. The coating and tape were then visually inspected to see how much coating was removed from the substrate by the tape. Adhesion was evaluated according to the following scale:

5B - The edges of the cuts are completely smooth; none of the squares of the lattice are detached.
4B - Small flakes of the coating are detached at intersections; less than 5 % of the area is affected.
3B - Small flakes of the coating are detached along edges and at intersections of cuts. The area affected is 5 to 15 % of the lattice.
2B - The coating has flaked along the edges and on parts of the squares. The area affected is 15 to 35 % of the lattice.
1B - The coating has flaked along the edges of cuts in large ribbons, and whole squares have detached. The area affected is 35 to 65 % of the lattice.
0B - Flaking and detachment worse than Grade 1.

Methylethylketone (MEK) Double Rubs

The MEK double rub test was performed according to ASTM D5402-06 Method 3 with the modification of using a 32 ounce ball peen hammer and Grade 50 bleached cheesecloth. The cloth was fastened with a wire to the flat end of the hammer. The cloth was redipped into MEK every 25 double rubs. The cloth was repositioned to a fresh area or replaced after testing of each panel.

Wedge bend flexibility

The wedge bend test is carried out as follows. A tapered 180 degree bend in the panel is formed by first bending it to 180° with a radius of about 0.5 cm and coating on the outside of the bend. Then one side of the bend was completely flattened to a near zero radius with an impactor at 40 in. lbs. The stressed surface is subjected to a tape pull and then rubbed with a solution of copper sulfate (mixture of 10 g of copper sulfate, 90 g of water and 3 g of sulfuric acid). Anywhere the coating has cracked dark spots appear indicating failure. The amount of coating failure (in mm) along the length of the wedge bend, which is 100 mm, is reported. Alternatively, the percentage of the failed length is recorded as "% failure".

Pot life measurement

Corresponding amount of curing agent and epoxy resin were measured and charged into a vial. After mixing in a speed mixer (Flack Tec. INC) at 3000 rpm for 2 min the sample was put on a viscometer. Viscosity was measured on a Brookfield TA AR2000 advanced viscometer using cone type # 60 at 25.0 °C, and the rotation rate set at 100 rpm. Pot life was defined as the time that it took to double the initial viscosity.

Dry time

The coating composition was made by mixing the curing agent and epoxy resin following a pre-determined formulation with or without wetting agent. The coating was then drawn down onto a glass substrate. The set to touch dry time was measured by dragging a needle through the coating using a BYK Drying time recorder.

Mandrel Bend Flexibility Test

Mandrel bend tests were carried out according to ASTM D522-93a(2008) using test method B.

Chemical Resistance Test

Filter papers (15 mm diameter) were put on the cured coatings. A couple drops of various chemicals (brake oil, 10 % acetic acid in water, 10 % sulfuric acid, 10 % sodium hydroxide solution, 50 % ethanol and methyl ethyl ketone) were individually deposited onto a filter paper. Plastic caps were then placed to cover the filter papers containing the test chemical. Data were recorded after soaking for 24 hr. The readings of the results were based on ASTM D1308-02(2007).

Micro-indentation (Marten) Hardness

A Fischer H100SMC Micro Indenter (Fischer Technology) computer controlled, ultra-low load dynamic micro indentation system was used, in conjunction with WIN-HCU (Fischer Technology) control software to obtain the coating hardness. In this test, a Vickers indenter in the form of a straight diamond pyramid with a square base was pressed into the surface of the coating with an applied force of 5 mN (rate = 5 mN/20 sec). The maximum load was then held for 10 sec (creep step) followed by the releasing of the load (rate = 5 mN/20 sec). A final creep step of 10 sec completed the test cycle. By taking into account the geometry of the indenter and the penetration depth for the applied force, a universal

hardness measurement (HU) was obtained. A higher HU number indicates higher coating hardness.

Dynamic Mechanical Analysis

Thin free standing films approximately 100 μm thick were prepared by premixing the corresponding amount of curing agent and epoxy resin in a speed mixer (Flack Tec. INC) at 3000 rpm for 3 min the sample was put on a viscometer. The formulation was then drawn down onto a PTFE peel paper. The free film was easily peeled off from PTFE peel paper after fully cured. The sample for DMA was prepared by cutting a 15 mm by 5 mm rectangle from the film. For the DMA analysis a TA instruments Q100 DMA system with a temperature cycle from 20 °C to 150 °C with a temperature ramp rate of 5 °C/min at a frequency of 1 Hz was used. The crosslink density was calculated using the storage modulus values well above $T_g$ in the rubbery plateau region using a simplified equation of kinetic theory of rubber elasticity

$$E' = 3\nu_e RT$$

where E' is the storage modulus (Pa) at the rubber plateau, $\nu_e$ is the crosslink density (mol/L), R is the gas constant (8.3 J/K/mol), and T is the temperature in Kelvin (K). $T_{g1}$ is the glass transition temperature of the first DMA temperature cycle, $T_{g2}$ is the glass transition obtained from the second temperature cycle. Crosslink density 1 and crosslink density 2 were calculated for the first and second temperature cycles, respectively.

Example 1: Synthesis of epoxy resin and diglycidyl ether of cis- and trans-2,2,4,4-tetramethylcyclobutane-1,3-diol (TMCBD)

Epoxidation of TMCBD was performed using four stages of aqueous sodium hydroxide addition to give TMCBD epoxy resin. TMCBD DGE was isolated by fractional vacuum distillation.

A. Epoxidation of TMCBD

Stage 1

A 5 L, 4 neck, glass, round bottom reactor was charged with TMCBD (432.63 g, 3.0 mol, 6.0 hydroxyl eq), epichlorohydrin (1110.24 g, 12.0 mol, 2:1 epichlorohydrin:TMCBD hydroxyl eq ratio), toluene (1.5 L), and benzyltriethylammonium chloride (43.62 g, 0.192 mole) in the indicated order. The TMCBD was a commercial grade product from Eastman Chemical. GC analysis of an aliquot of the TMCBD after normalization to remove solvent (acetonitrile) revealed the presence of the two isomeric components at 45.3 and 54.7 area %. The reactor was additionally equipped with a condenser (maintained at 0 °C), a thermometer, a Claisen adaptor, an overhead nitrogen inlet (1 LPM $N_2$ used), and a stirrer assembly (PTFE paddle, glass shaft, variable speed motor). A controller monitored the temperature registered on the thermometer in the reactor and provided heating via the heating mantle placed under the reactor as well as cooling delivered by a pair of fans positioned on the reactor exterior. Sodium hydroxide (360.0 g, 9.0 moles) dissolved in DI water (360 g) for the initial addition was added to a side arm vented addition funnel, sealed with a ground glass stopper, then attached to the reactor. Stirring commenced to give a 23 °C mixture followed by commencement of dropwise addition of the aqueous sodium hydroxide solution. The reaction mixture was allowed to self-heat during the aqueous sodium hydroxide addition time. After 217 min, 68.75 % of the aqueous sodium hydroxide was added causing the reaction temperature to reach a maximum of 30 °C and then remain at that temperature for the next 30 min. Addition of the aqueous sodium hydroxide required a total of 270 minutes. The reaction temperature had declined to 29 °C at the end of the aqueous sodium hydroxide addition and the product was a cloudy biphasic mixture additionally containing precipitated solids. After 14.57 hr of postreaction, the temperature had declined to 26 °C and a sample was removed for GC analysis. GC analysis after normalization to remove solvents (acetonitrile and toluene) and unreacted epichlorohydrin revealed the presence of 7.99 area % light components, 9.63 area % unreacted TMCBD; 21.86 area % monoglycidyl ethers, 0.18 area % of a pair of components associated with the diglycidyl ether peaks, 54.53 area % diglycidyl ethers, and 5.81 area % oligomers that were volatile under the conditions of the GC analysis. (The sample for GC analysis was inhomogeneous with respect to precipitated TMCBD reactant present in the reaction mixture and thus understates the amount of this reactant.) After a cumulative 14.72 hr of postreaction, DI water (1 L) was added to the stirred reactor causing an exotherm to 27 °C. Stirring ceased after 30 min and the reactor contents were allowed to settle. A layer of crystalline solid was noted between the organic and aqueous layers. The bulk of the organic layer was decanted from the reactor followed by vacuum filtration of the remaining organic layer, precipitated solid and aqueous layer through a fritted glass funnel. The filtrate was added to a separatory funnel then the organic layer was recovered and the aqueous

layer discarded. A total of 80.43 g of damp, white crystalline solid was recovered on the fritted glass funnel. GC analysis of an aliquot of the solid revealed it to be unreacted TMCBD.

Stage 2

The combined organic layer andunreactedTMCBD from Stage 1 were reloaded into the reactor along with fresh benzyltriethylammonium chloride (21.81 g, 0.1915 mol). Sodium hydroxide (180 g, 4.5 mol) dissolved in DI water (180 g) was added to a side arm vented addition funnel, sealed with a ground glass stopper, then attached to the reactor. Stirring commenced to give a 25 °C mixture followed by commencement of dropwise addition of the aqueous sodium hydroxide solution. The reaction mixture was allowed to self-heat during the aqueous sodium hydroxide addition time. Thus, after 90 min, 75.0 % of the aqueous sodium hydroxide was added causing the reaction temperature to reach a maximum of 30 °C. Addition of the aqueous sodium hydroxide required a total of 115 minutes. The reaction temperature had declined to 28.5 °C at the end of the aqueous sodium hydroxide addition and the product was a cloudy biphasic mixture additionally containing precipitated solids. After 16.17 hr of postreaction the temperature had declined to 26 °C and a sample was removed for GC analysis. GC analysis after normalization to remove solvents (acetonitrile and toluene) and unreacted epichlorohydrin revealed the presence of 6.46 area % light components, 3.77 area % unreacted TMCBD; 12.16 area % monoglycidyl ethers, 0.19 area % of a pair of components associated with the diglycidyl ether peaks, 69.09 area % diglycidyl ethers, and 8.33 area % oligomers that were volatile under the conditions of the GC analysis (note: the sample for GC analysis was inhomogeneous with respect to precipitated TMCBD reactant present in the reaction mixture and thus understates the amount of this reactant). After a cumulative 16.33 hr of postreaction, DI water (455 mL) was added to the stirred reactor causing an exotherm to 27.5 °C. Stirring ceased after 30 min and the reactor contents were allowed to settle. A layer of crystalline solid was noted between the organic and aqueous layers. The bulk of the organic layer was decanted from the reactor followed by vacuum filtration of the remaining organic layer, precipitated solid and aqueous layer through a fritted glass funnel. The filtrate was added to a separatory funnel then the organic layer was recovered and the aqueous layer discarded. A total of 30.17 g of damp, white crystalline solid was recovered on the fritted glass funnel. GC analysis of an aliquot of the solid revealed it to be unreacted TMCBD.

Stage 3

The combined organic layer andunreactedTMCBD from Stage 2 were reloaded into the reactor along with fresh benzyltriethylammonium chloride (10.91 g, 0.0479 mole). Sodium hydroxide (90 g, 2.25 mol) dissolved in DI water (90 g) was added to a side arm vented addition funnel, sealed with a ground glass stopper, then attached to the reactor. Stirring commenced to give a 25 °C mixture followed by commencement of dropwise addition of the aqueous sodium hydroxide solution. The reaction mixture was allowed to self-heat during the aqueous sodium hydroxide addition time. Thus, after 13 min, 21.85 % of the aqueous sodium hydroxide was added causing the reaction temperature to reach a maximum of 27 °C and remain at this temperature for the duration of the aqueous sodium hydroxide addition. Addition of the aqueous sodium hydroxide required a total of 70 min. The product was a cloudy biphasic mixture additionally containing precipitated solids at the end of the aqueous sodium hydroxide addition. After 16.95 hr of postreaction the temperature had declined to 25 °C and a sample was removed for GC analysis. GC analysis after normalization to remove solvents (acetonitrile and toluene) and unreacted epichlorohydrin revealed the presence of 7.14 area % light components, 3.03 area % unreacted TMCBD; 8.16 area % monoglycidyl ethers, 0.16 area % of a pair of components associated with the diglycidyl ether peaks, 72.41 area % diglycidyl ethers, and 9.10 area % oligomers that were volatile under the conditions of the GC analysis (note: the sample for GC analysis was inhomogeneous with respect to precipitated TMCBD reactant present in the reaction mixture and thus understates the amount of this reactant). After a cumulative 17.00 hr of postreaction, DI water (185 mL) was added to the stirred reactor causing an exotherm to 27 °C. Stirring ceased after 30 min and the reactor contents were allowed to settle. A layer of crystalline solid was noted between the organic and aqueous layers. The bulk of the organic layer was decanted from the reactor followed by vacuum filtration of the remaining organic layer, precipitated solid and aqueous layer through a fritted glass funnel. The filtrate was added to a separatory funnel then the organic layer was recovered and the aqueous layer discarded. A total of 8.19 g of damp, white crystalline solid was recovered on the fritted glass funnel. GC analysis of an aliquot of the solid revealed it to be unreacted TMCBD.

Stage 4

The combined organic layer and unreacted TMCBD from Stage 3 were reloaded into the reactor along with fresh benzyltriethylammonium chloride (10.91 g, 0.0479 mole). Sodium hydroxide (90 g, 2.25 moles) dissolved in DI water (90 g) was added to a side arm vented addition funnel, sealed with a ground glass stopper, then attached to the reactor. Stirring commenced to give a 24 °C mixture followed by commencement of dropwise addition of the aqueous

sodium hydroxide solution. The reaction mixture was allowed to self-heat during the aqueous sodium hydroxide addition time. Thus, after 35 min, 58.33 % of the aqueous sodium hydroxide was added causing the reaction temperature to reach a maximum of 26 °C and remain at this temperature for the duration of the aqueous sodium hydroxide addition. Addition of the aqueous sodium hydroxide required a total of 67 minutes. The product was a cloudy biphasic mixture at the end of the aqueous sodium hydroxide addition. After 20.63 hr of postreaction the temperature had declined to 25 °C and a sample was removed for GC analysis. GC analysis after normalization to remove solvents (acetonitrile and toluene) and unreacted epichlorohydrin revealed the presence of 7.91 area % light components, 1.19 area % unreacted TMCBD; 4.72 area % monoglycidyl ethers, 0.17 area % of a pair of components associated with the diglycidyl ether peaks, 74.45 area % diglycidyl ethers, and 11.56 area % oligomers that were volatile under the conditions of the GC analysis. After a cumulative 20.71 hr of postreaction, DI water (185 mL) was added to the stirred reactor causing an exotherm to 27 °C. Stirring ceased after 30 min and the reactor contents were allowed to settle. (Crystalline solid was no longer observed between the organic and aqueous layers.) The organic layer was decanted from the reactor into a pair of 2 L separatory funnel and the aqueous layer remaining in the reactor discarded along with a minor amount of aqueous layer removed from the separatory funnels.

B. Epoxy Resin Isolation

The organic layer equally split between the pair of separatory funnels was washed with DI water (400 mL per separatory funnel) by vigorously shaking. The washed product was allowed to settle for 4 hr, then the aqueous layer was removed and discarded as waste. A second wash was completed using the aforementioned method, with settling overnight (20 hr). The combined, hazy organic solution was vacuum filtered through a bed of anhydrous, granular sodium sulfate in a 600 mL fritted glass funnel providing a transparent filtrate. Toluene was used to wash epoxy resin product entrained in the sodium sulfate into the filtrate.

Rotary evaporation of the filtrate using a maximum oil bath temperature of 65 °C to a final vacuum of 5.6 mm ofHg removed the bulk of the volatiles. A total of 770.66 g of yellow orange, transparent liquid was recovered after completion of the rotary evaporation. GC analysis after normalization to remove solvent (acetonitrile) revealed the presence of 4.69 area % "lights" (2 peaks with retention times between the diol starting reactant and monoglycidyl ether), 4.47 area % monoglycidyl ethers, 0.17 area % of a pair of components associated with the diglycidyl ether peaks, 76.61 area % diglycidyl ethers, and 14.06 area % oligomers that were volatile under the conditions of the GC analysis. GC analysis revealed that essentially all unreacted epichlorohydrin, toluene, and unreacted diol had been removed. The TMCBD epoxy resin had an I.C.I. cone and plate viscosity of 23.3 cP, as shown in Table 6.

C. Fractional Vacuum Distillation

A portion (765.08 g) of the residue from the rotary evaporation in Step B was added to a 1 L, 3 neck, glass, round bottom reactor equipped with magnetic stirring and a thermometer for monitoring the pot temperature. A one piece integral vacuum jacketed Vigreux distillation column with distillation head was attached to a second section of vacuum jacketed Vigreux distillation column through the respective 24/40 joints on both columns. The coupled pair of distillation columns was then attached to the reactor. Each of the distillation columns nominally provided 9 to 18 theoretical plates depending on the mode of operation. The distillation head was equipped with an overhead thermometer, air cooled condenser, a receiver and a vacuum takeoff. A vacuum pump was employed along with a liquid nitrogen trap and an in-line digital thermal conductivity vacuum gauge. Stirring commenced followed by application of full vacuum then progressively increased heating using a thermostatically controlled heating mantle. A clean receiver was used to collect each respective distillation cut. During the distillation, the initial distillation cuts were taken to sequentially remove all components boiling below the monoglycidyl ethers of TMCBD, then the bulk of the monoglycidyl ethers. The final distillation cuts sought to selectively remove the diglycidyl ethers, leaving the oligomeric product (143.38 g) in the distillation pot. GC analysis revealed that the oligomers contained a residual 0.1 area % monoglycidyl ether, 25.3 area % diglycidyl ether, with the balance as the oligomers. After normalization to remove the peaks associated with acetonitrile and the diglycidyl ether, the GC analysis demonstrated the oligomeric components containing multiple isomers as shown in Table 2 where the structures are based on molecular weight data obtained from chemical ionization gas chromatographic-mass spectroscopic analysis.

Table 2

| Component | GC Area % |
|---|---|
| 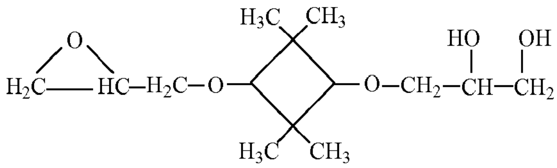 (plus a minor amount of other non-chloro and monochloro isomeric compounds) | 5.48 |
| 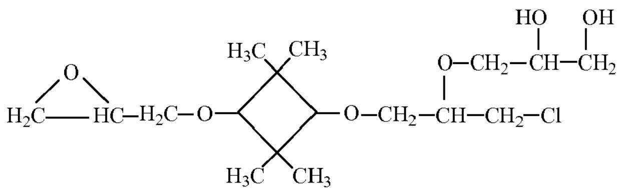 and 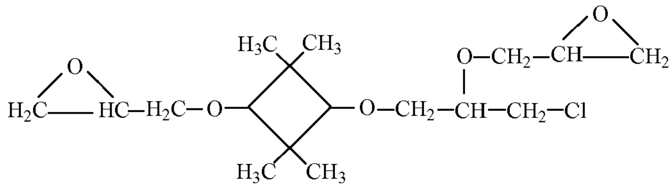 and 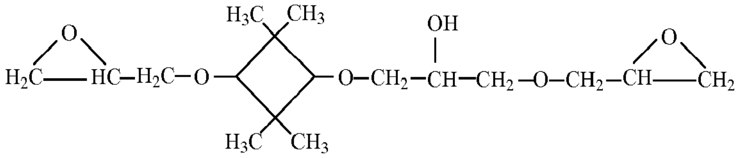 (plus a minor amount of other non-chloro isomeric compounds) | 5.59 |
| 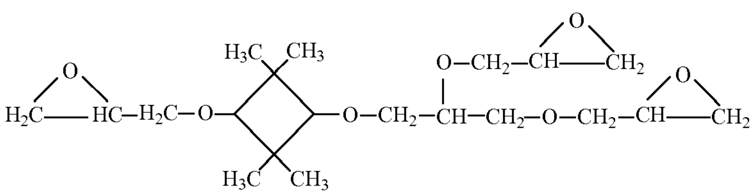 (plus a minor amount of monochloro isomeric compounds) | 33.90 |
| 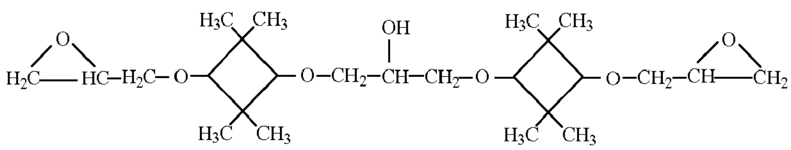 | 12.44 |
| 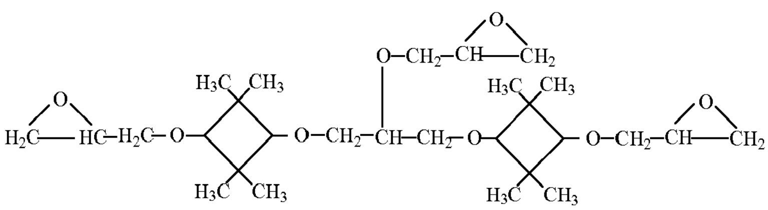 | 42.59 |

A master batch was prepared by combining various distillation cuts to give 448.24 g of TMCBD DGE. GC analysis revealed 99.61 area % diglycidyl ethers of TMCBD and 0.23 area % monoglycidyl ethers of TMCBD, with the balance (0.15 area %) being a minor peak associated with the isomeric diglycidyl ethers. The EEW of the TMCBD DGE was 130.07 as determined by titration. The oxirane oxygen content of the TMCBD DGE was 12.30 weight %, which is

98.56 % of theoretical. The theoretical oxirane oxygen content for 100 % TMCBD DGE is 12.48 %. The I.C.I. cone and plate viscosity of the TMCBD DGE was 14.5 cP. Total chlorine for the TMCBD DGE was 59 ± 2 ppm as determined via neutron activation analysis. Example 2: Repeat synthesis of the epoxy resin and diglycidyl ether of TMCBD

The procedure of Example 1 was repeated, including the four-stage epoxidation of TMCBD (A), epoxy resin isolation (B), and fractional vacuum distillation (C). The resulting epoxy resin contained 99.72 area % diglycidyl ethers of TMCBD and 0.07 area % monoglycidyl ethers of TMCBD, with the balance (0.21 area %) being a minor peak associated with isomeric diglycidyl ethers. The EEW was 129.93, as determined by titration. The oxirane oxygen content was 12.31 %, which is 98.64 % of theoretical. The I.C.I. cone and plate viscosity was 14.5 cP.

Comparative Examples 1-5: Synthesis and characterization of the epoxy resin and diglycidyl ether of isomeric cyclohexanedimethanols (CHDM)

For each of Comparative Examples 1-5, the epoxidation of CHDM was performed in the same manner as the epoxidation of TMCBD in Example 1, except that CHDM was used in place of TMCBD to prepare the epoxy resin. In Comparative Examples 4-5, CHDM DGE was isolated from the epoxy resin by vacuum distillation.

Comparative Example 1: First example of epoxy resin of cis- and trans-1,4-CHDM

The results of GC analysis of the epoxy resin of cis- and trans-1,4-CHDM of Comparative Example 1 after isolation step (B) are summarized in Table 3. The I.C.I. cone and plate viscosity was 62.5 cP.

Table 3

| Component | Area % |
|---|---|
| Lights | 0.03 |
| CHDM Monoglycidyl Ethers | 4.40 |
| CHDM Diglycidyl Ethers | 76.61 |
| Minor peaks associated with mono and diglycidyl ether peaks | 0.14 |
| 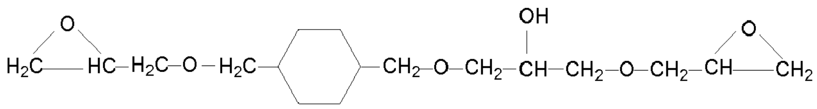 and and 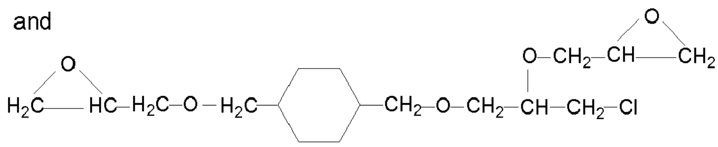 | 0.91 |
| 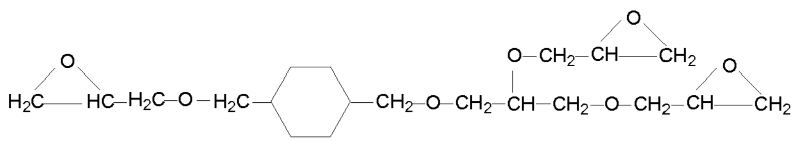 | 3.51 |
| 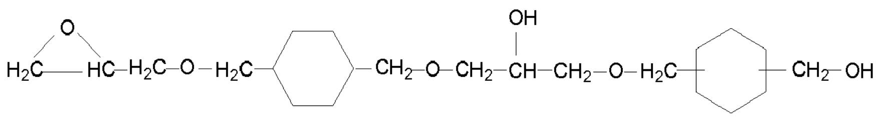 | 0.04 |
| 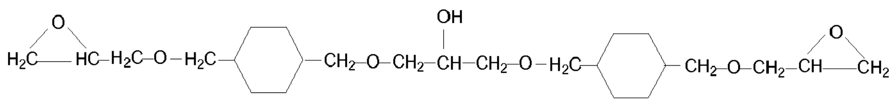 | 1.92 |
| 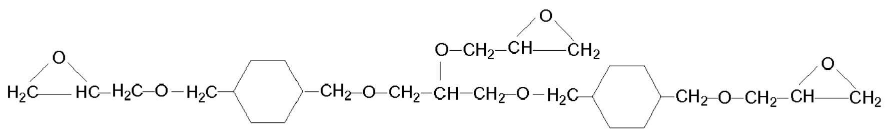 | 12.44 |

Comparative Example 2: Second example of epoxy resin of cis- and trans-1,4-CHDM

The results of GC analysis of the epoxy resin of cis- and trans-1,4-CHDM of Comparative Example 2 after isolation step (B) are summarized in Table 4. The I.C.I. cone and plate viscosity was 60.5 cP.

Table 4

| Component | Area % |
|---|---|
| Lights | 0.05 |
| CHDM Monoglycidyl Ethers | 5.73 |
| CHDM Diglycidyl Ethers | 79.60 |
| Minor peaks associated with mono and diglycidyl ether peaks | 0.14 |
| 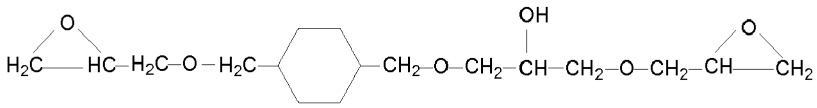 and and 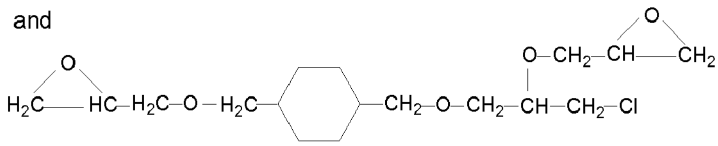 | 0.77 |
| 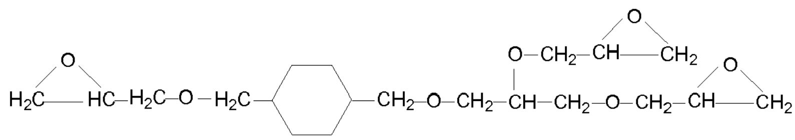 | 2.39 |
| 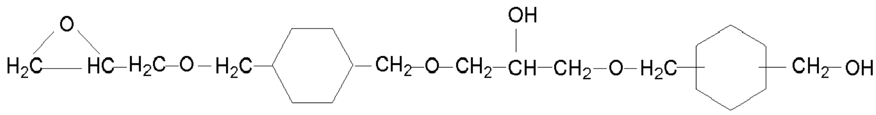 | 0.40 |
| 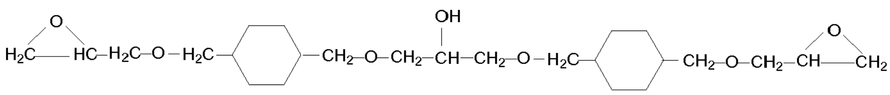 | 1.84 |
| 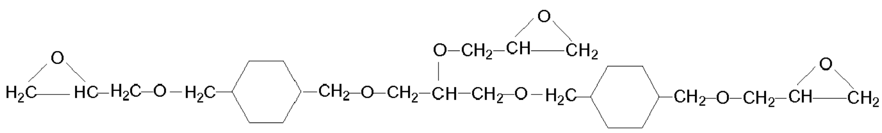 | 9.08 |

Comparative Example 3: Third example of epoxy resin of cis- and trans-1,4-CHDM

The results of GC analysis of the epoxy resin of cis- and trans-1,4-CHDM of Comparative Example 3 after isolation step (B) are summarized in Table 5. The I.C.I. cone and plate viscosity was 61.5 cP.

Table 5

| Component | Area % |
|---|---|
| Lights | 0.07 |
| Monoglycidyl Ethers | 5.71 |
| Diglycidyl Ethers | 77.33 |
| Minor peaks associated with mono and diglycidyl ether peaks | 0.14 |

(continued)

| Component | Area % |
|---|---|
| 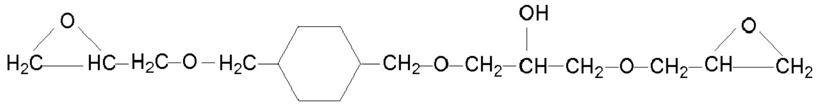<br>and<br>and<br>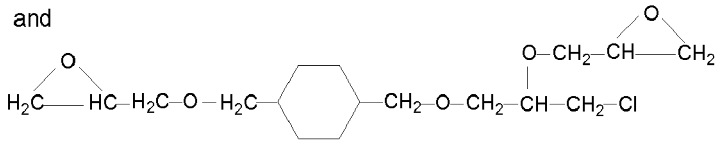 | 1.04 |
| 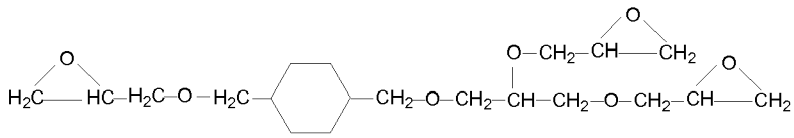 | 3.30 |
| 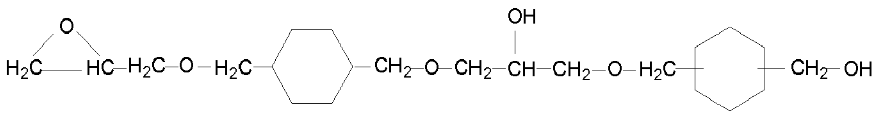 | 0.77 |
| 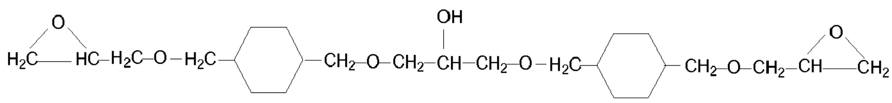 | 1.89 |
| 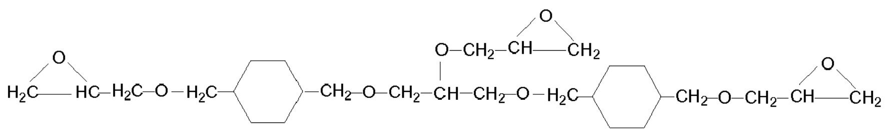 | 9.75 |

Comparative Example 4: Viscosity of diglycidyl ether of cis- and trans-1,3- and 1,4-cyclohexanedimethanol (CHDM DGE)

In this example, CHDM DGE was isolated form the epoxy resin of CHDM by vacuum distillation step (C). GC analysis of the cis- and trans-1,3- and 1,4-CHDM DGE revealed 99.60 area % diglycidyl ethers of CHDM, 0.14 area % monoglycidyl ethers of CHDM with the balance (0.26 area %) present as two minor peaks associated with isomeric diglycidyl ethers. The EEW was 128.73 as determined by titration. The I.C.I. cone and plate viscosity was 29 cP.

Comparative Example 5: Viscosity of cis- and trans-1,4-CHDM DGE

Cis- and trans-1,4-CHDM DGE was isolated from the epoxy resin of cis- and trans-1,4-CHDM by vacuum distillation step (C) as in Comparative Example 4. GC analysis revealed 99.67 area % diglycidyl ethers of CHDM, with the balance (0.33 area %) present as three minor peaks associated with isomeric diglycidyl ethers. The I.C.I. cone and plate viscosity was 27.5 cP.

The diglycidyl ether content and I.C.I. cone and plate viscosities of Examples 1 and 2 and Comparative Examples 1-5 are summarized in Table 6. As can be seen from Table 6, the epoxy resin of TMCBD obtained in isolation step (B) has a significantly lower viscosity than the epoxy resin of CHDM obtained in isolation step (B). Moreover purified TMCBD DGE obtained in vacuum distillation step (C) has a significantly lower viscosity than purified CHDM DGE obtained in vacuum distillation step (C) at approximately the same product purity (99.6+ area %).

Table 6

| Example | 1 | 1 | 2 | - | - | - | - | - |
|---|---|---|---|---|---|---|---|---|
| Comparative Example | - | - | - | 1 | 2 | 3 | 4 | 5 |
| Step | B | C | C | B | B | B | C | C |

(continued)

| | | | | | | | | |
|---|---|---|---|---|---|---|---|---|
| TMCBD DGE purity (area %) | 76.61 | 99.61 | 99.72 | - | - | - | - | - |
| CHDM DGE purity (area %) | - | - | - | 76.61 | 79.60 | 77.33 | 99.60 | 99.67 |
| I.C.I. viscosity (cP) | 23.3 | 14.5 | 14.5 | 62.5 | 60.5 | 60.5 | 29.0 | 27.5 |

Examples 1 and 2 and Comparative Examples 1-5 also show that when TMCBD was epoxidized via reaction with epichlorohydrin in an aqueous epoxidation process, greater selectivity toward the diglycidyl ether was obtained than in the corresponding aqueous epoxidation of CHDM. This is surprising given that TMCBD is a secondary diol while CHDM is a primary diol. The secondary hydroxyl groups of TMCBD are expected to be less reactive toward coupling with epichlorohydrin than the primary hydroxyl groups of CHDM. Furthermore, because secondary hydroxyl groups are generated from the reaction with epihalohydrin to form chlorohydrin intermediates, competition is expected between reaction of epihalohydrin with the secondary hydroxyl group of said chlorohydrin and the secondary hydroxyl group on the cyclobutane ring. Such competition would lead to chloromethyl-containing oligomers at the expense of the desired TMCBD DGE. Surprisingly, only minor amounts of chloromethyl-containing oligomers are detected in the epoxy resin of TMCBD.

Comparative Example 6: Lewis acid-catalyzed epoxidation cis- and trans-1,4-CHDM

A commercial grade of an epoxy resin of CHDM (ERISYS™ GE-22S) produced via Lewis acid-catalyzed epoxidation of cis- and trans-1,4-CHDM was analyzed by GC-MS, and the following oligomeric components, i.e. components having a higher retention time in the GC-MS analysis than CHDM DGE, were identified:

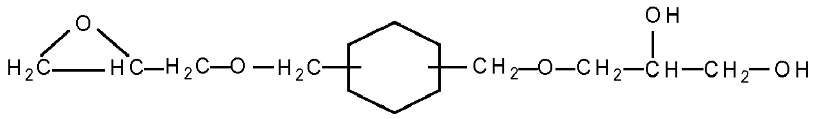
7

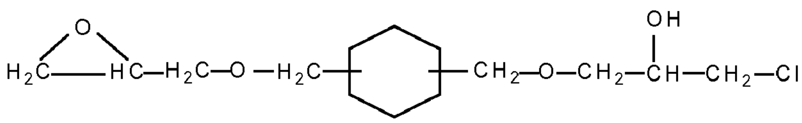
8

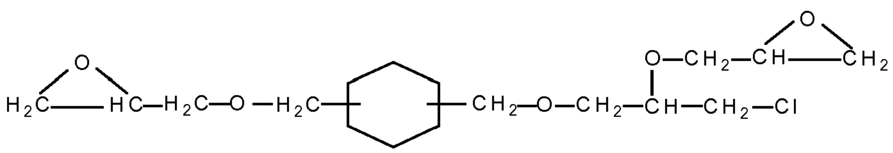
9

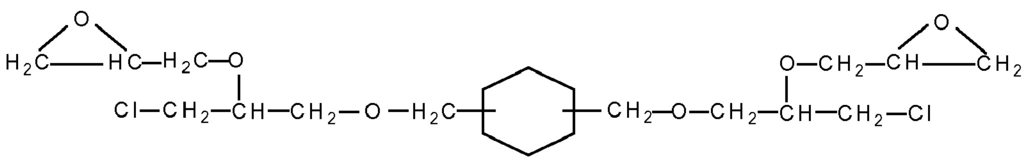
10

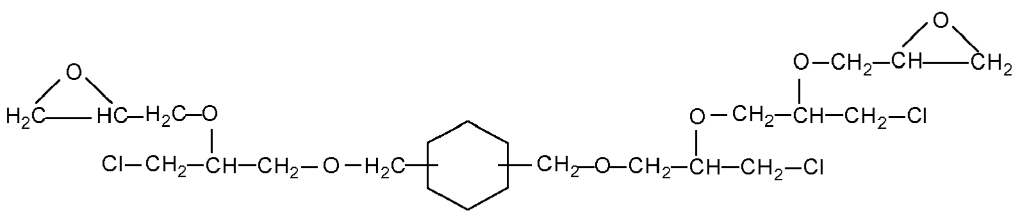
11

The chloromethyl-containing diglycidyl ether of Formula 9 was present in an amount of greater than 80 area %. It is clear from the chemical structures of the components of Formulae 7-11 that the Lewis acid catalyzed epoxidation produces a very different reaction product than that obtained by phase transfer catalyzed epoxidation. None of the components

of Formulae 7-11 are found in the epoxy resin from phase transfer catalyzed epoxidation of cyclohexanedimethanols, as characterized by Tables 1-4. It is also noted that unlike the epoxy resin obtained by phase transfer catalyzed epoxidation, which contains triglycidyl ethers, the highest glycidyl ether group functionality of the epoxy resin obtained by Lewis acid catalyzed epoxidation is two (diglycidyl ethers).

The Lewis acid catalyzed epoxidation also produced a large amount of by-products containing bound chlorine in the form of chloromethyl groups. Each of the components of Formulae 8-11 have chlorine bound in the form of chloromethyl groups. The presence of the component of Formula 8, a monoglycidyl ether monochlorohydrin, indicates that further treatment with aqueous sodium hydroxide is needed to complete the dehydrochlorination step of the epoxidation. The presence of bound chloride precludes the use of this epoxy resin from many applications including electronics and coatings used in contact with food.

Example 3: Preparation and curing of a blend of TMCBD DGE and DETA

A portion (5.148 g, 0.040 epoxide eq) of the diglycidyl ether of cis- and trans-2,2,4,4-tetramethylcyclobutane-1,3-diol from Example 2 and DETA (0.818 g, 0.040 NH eq) were added to a glass bottle and vigorously stirred together. A portion (9.1 mg) of the homogeneous solution was removed for DSC analysis. The results of the DSC analysis are summarized in Table 7. An exotherm attributed to curing was observed with a 44.9 °C onset, 114.0 °C maximum, and a 199.3 °C endpoint accompanied by an enthalpy of 661.0 J/g. The cured product recovered from the DSC analysis was a transparent, rigid solid with a pale yellow color.

The remaining portion of the curable blend was added to an aluminum dish and cured in an oven using the following schedule: 1 hr at 70 °C, 1 hr at 100 °C, 1 hr at 125 °C, and 1 hr at 150 °C. A portion (35.3 mg) of the transparent, pale yellow colored casting was removed for DSC analysis. The results of the DSC analysis are summarized in Table 7. A $T_g$ of 86 °C was observed, with no indication of further curing or exothermic decomposition observed up to the 250 °C DSC analysis temperature. A second scan using the aforementioned conditions again revealed a $T_g$ of 86 °C. A third scan with an increased final temperature to 300 °C resulted in a $T_g$ of 87 °C and a slight exothermic shift commencing at 261 °C. A fourth scan using the aforementioned conditions resulted in a $T_g$ of 88 °C and a slight exothermic shift at 258 °C.

Table 7

| Example | 3 | 4 | - |
|---|---|---|---|
| Comparative Example | - | - | 7 |
| TMCBD DGE (epoxide eq.) | 0.040 | 0.0408 | - |
| CHDM DGE (epoxide eq.) | - | - | 0.039 |
| DETA (NH eq.) | 0.040 | 0.0408 | 0.039 |
| IPDA (NH eq.) | - | 1.736 | - |
| $T_g$, first scan (°C) | 86 | 139.2 | 64.9[a] / 62.9[b] |
| $T_g$, second scan (°C) | 86 | 141.7 | 65.5[a] / 62.4[b] |
| $T_g$, third scan (°C) | 87 | 141.8 | - |
| $T_g$, fourth scan (°C) | 88 | 143.8 | - |
| Cure Onset (°C) | 44.9 | 57.3 | 44.9 |
| Peak Exotherm (°C) | 114.0 | 137.6 | 116.8 |
| Cure End (°C) | 199.3 | 247.2 | 203.8 |
| Enthalpy (J/g) | 661.0 | 554.5 | 719.7 |
| [a]Sample 7a [b]Sample 7b | | | |

Example 4: Preparation and curing of a curable blend of TMCBD DGE and IPDA

A portion (5.298 g, 0.0408 epoxide eq) of TMCBD DGE from Example 2 and 3-aminomethyl-3,5,5-trimethylcyclohexylamine (isophoronediamine, or IPDA) (1.736 g, 0.0408 NH eq) were added to a glass bottle and vigorously stirred together. The IPDA was a commercial grade product, VESTAMIN® IPD Epoxy Curing Agent, from Evonik Degussa. A portion (8.2 mg) of the homogeneous solution was removed for DSC analysis. An exotherm attributed to curing was

observed with a 57.3 °C onset, 137.6 °C maximum, and a 247.2 °C endpoint accompanied by an enthalpy of 554.5 J/g. The cured epoxy resin recovered from the DSC analysis was a transparent, rigid solid with a pale yellow color.

The remaining portion of the curable blend was added to an aluminum dish and cured in an oven using the schedule given in Example 3. A portion (42.8 mg) of the transparent, pale yellow casting was removed for DSC analysis. The results of the DSC analysis are summarized in Table 7. A $T_g$ of 139.2 °C was observed, with no indication of further curing or exothermic decomposition observed up to the 250 °C DSC analysis temperature. A second scan using the aforementioned conditions again revealed a $T_g$ of 141.7 °C. A third scan with an increased final temperature of 300 °C resulted in a $T_g$ of 141.8 °C and a slight exothermic shift commencing at 250 °C. A fourth scan using the aforementioned conditions gave a $T_g$ of 143.8 °C with no exothermic shift observed.

Comparative Example 7: Preparation and curing of a curable blend of high purity cis- and trans-1,3- and 1,4-CHDM DGE and DETA

A portion (5.023 g, 0.039 epoxide eq) of cis- and trans-1,3- and 1,4-CHDM DGE obtained from the fractional vacuum distillation of the corresponding epoxy resin was added to a glass vial. GC analysis of the cis- and trans-1,3- and 1,4-CHDM DGE demonstrated 99.49 area % CHDM DGE, 0.16 area % CHDM MGE, 0.35 area % of a pair of minor peaks associated with the diglycidyl ether peak. DETA (0.810 g, 0.039 NH eq) was added to the glass vial and then the contents were vigorously stirred together. A portion (11.4 mg) of the homogeneous solution was removed for DSC analysis. The results of the DSC analysis are summarized in Table 7. An exotherm attributed to curing was observed with a 44.9 °C onset, 116.8 °C maximum, and a 203.8 °C endpoint accompanied by an enthalpy of 719.7 J/g. The cured product recovered from the DSC analysis was a transparent, light yellow, rigid solid.

As can be seen from Table 7, TMCBD DGE (Examples 4 and 5) provides cured compositions having increased glass transition temperatures over those obtained from cured compositions based on CHDM DGE (Comparative Example 7). This is surprising, since TMCBD and CHDM are constitutional isomers possessing the same number of carbon, hydrogen and oxygen atoms.

The remaining portion of the CHDM DGE and DETA blend was added to an aluminum dish and cured in an oven using the heating schedule of Example 3. The casting exhibited regions of deep channels or cracks which were first observed during the initial curing at 70 °C. It is possible that the very high enthalpy on curing (Comparative Example 7) may be responsible for the channels propagated through the casting. Two separate samples of the casting were randomly taken and analyzed by DSC (28.5 mg for Sample 7a and 32.4 mg for Sample 7b). The results of the DSC analyses are summarized in Table 8. For Sample 8a, a $T_g$ of 64.9 °C was observed. A second scan revealed a $T_g$ of 65.5 °C. For Sample 8b, a $T_g$ of 62.9 °C was observed. A second scan revealed a $T_g$ of 62.4 °C. In the DSC analyses of both Samples 7a and 7b, residual exothermicity was present in the first scan, indicating incomplete cure. In the second scan, the residual exothermicity was no longer detected in Sample 7b, but was still present in Sample 7a, although in a slightly reduced amount. The large enthalpy associated with this curable mixture (Comparative Example 7) may be responsible for the incomplete cure, with cure occurring so energetically that the mobility of amine groups and epoxide groups in the thermosetting matrix is restricted.

Table 8

| | Onset of Residual Exothermicity (°C) | Peak Exotherm (°C) | End of Residual Exothermicity (°C) | Enthalpy (J/g) |
|---|---|---|---|---|
| Sample 7a | | | | |
| First Scan | 151.9 | 175.9 | 239.0 | 5.6 |
| Second Scan | 157.0 | 179.3 | 224.8 | 4.7 |
| Sample 7b | | | | |
| Frist Scan | 155.8 | 180.6 | 241.4 | 3.6 |
| Second Scan | none detected | - | - | - |

Example 5: Preparation and curing of general protective/maintenance coating compositions with TMCBD DGE

Two coating compositions were prepared using the TMCBD DGE of Example 2 (99.72 area % by GC) as described below. Coating evaluation results are summarized in Table 9.

Example 5a: Curing with POLYPOX® H013 Epoxy Resin Hardener

A mixture of 5 g of TMCBD DGE from Example 2 and 3.46 g of POLYPOX® H013 Epoxy Resin Hardener, which is an accelerated phenol-free Mannich base curing agent having an AHEW of 90 (available from Dow Chemical, Midland, Michigan) was added to a glass vial and speed mixed at 3000 rpm for 2 min. The composition was then drawn down onto a steel panel, and onto PTFE peel paper, for DMA using a #50 wire wound rod drawdown bar. The coatings were cured at room temperature for 7 days before evaluation. The thickness of the cured coatings were approximately 4 mils.

Example 5b: Curing with CARDOLITE LITE 2001LV

A mixture of 5 g of TMCBD DGE from Example 2 and 4.81 g of CARDOLITE LITE 2001LV, which is a Mannich base of cardanol-formaldehyde resin having an AHEW of 125 (available from Cardolite, Newark New Jersey) was added to a glass vial and speed mixed at 3000 rpm for 2 min. The composition was coated and cured using the method of Example 5a. The thickness of the cured coating was approximately 4 mils.

Table 9

| Example | 5a | 5b | - | - |
|---|---|---|---|---|
| Comparative Example | - | - | 8a | 8b |
| TMCBD DGE (g) | 5 | 5 | - | - |
| CHDM DGE (g) | - | - | 5 | 5 |
| POLYPOX® H013 (g) | 3.46 | - | 3.17 | - |
| CARDOLITE LITE 2001LV (g) | - | 4.81 | - | 4.44 |
| | | | | |
| Coating thickness (mil) | 4 | 4 | 4 | 4 |
| Initial viscosity (cP) | 70 | 148.1 | 66 | 225.6 |
| Pot life (min) | 9.3 | 105.5 | 9 | 124 |
| Dry time (hr) | 5.8 | >24 | 5.3 | >24 |
| Marten hardness ($N/mm^2$) | 141 | 2.19 | 26.3 | 1.8 |
| Cross hatch adhesion | 2 | 5 | 5 | 5 |
| Mandrel bend | Pass | Pass | Pass | Pass |
| Corrosion resistance | | | | |
| Brake oil | 5 | 5 | 5 | 5 |
| MEK | 5 | 3 | 5 | 3 |
| 10 % Acetic acid | 4 | 1 | 4 | 1 |
| 50 % Ethanol | 5 | 5 | 5 | 5 |
| 10 % Hydroxide | 5 | 5 | 5 | 5 |
| 10 % Sulfuric acid | 4 | 2 | 4 | 2 |
| DMA analysis | | | | |
| $T_{g1}$ (°C) | 47.9 | - | 40.3 | - |
| $T_{g2}$ (°C) | 65.2 | - | 60.8 | - |
| Crosslink density 1 | 1.35 | - | 1.63 | - |
| Crosslink density 2 | 1.29 | - | 1.66 | - |

Comparative Example 8: Preparation and curing of general protective/maintenance coating compositions with cis- and trans-1,4-CHDM DGE

Two coating compositions were prepared using cis- and trans-1,4-CHDM DGE as described below. Coating evaluation results are summarized in Table 9.

Comparative Example 8a: Curing with POLYPOX® H013 Epoxy Resin Hardener

A mixture of 5 g of cis- and trans-1,4-CHDM DGE and 3.17 g of POLYPOX® H013 Epoxy Resin Hardener was added to a glass vial and speed mixed at 3000 rpm for 2 min. The composition was then drawn down onto a steel panel and on PTFE peel paper for DMA using a #50 wire wound rod drawdown bar. The coating was cured at room temperature for 7 days before evaluation. The thickness of the cured coating was approximately 4 mils.

Comparative Example 8b: Curing with CARDOLITE LITE 2001LV

A mixture of epoxy resin of cis- and trans-1,4-CHDM (70 % cis- and trans-1,4-CHDM DGE) (5 g) and CARDOLITE LITE 2001LV (AHEW of 125) (4.4 g) was added to a glass vial and mixed at 3000 rpm for 2 min. The solution was coated and cured using the method of Comparative Example 8a. The thickness of the cured coating was approximately 4 mils.

As can be seen from Table 9, curable compositions comprising TMCBD DGE have an increased Marten hardness compared to curable compositions comprising CHDM DGE comprising the same curing agent. Specifically, the Marten hardness of Example 5a is 141 $N/mm^2$ as compared to the Marten hardness of Comparative Example 8a of only 26.3 $N/mm^2$. Moreover, the Marten hardness of Example 5b is 2.19 $N/mm^2$ compared to the Marten hardness of Comparative Example 8b of 1.8 $N/mm^2$. The $T_g$ data of Table 9 show that cured compositions comprising TMCBD DGE have a higher $T_g$ compared to the same cured compositions comprising CHDM DGE instead of TMBCD DGE.

## Claims

1. An epoxy resin comprising a diglycidyl ether of Formula 1

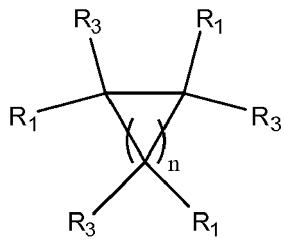

1

wherein n is 1, 2, or 3; each $R_1$ is independently hydrogen, $C_{1-12}$ alkyl, $C_{3-12}$ cycloalkyl, or $C_{6-24}$ aryl; and each $R_3$ is independently hydrogen, $C_{1-12}$ alkyl, $C_{3-12}$ cycloalkyl, $C_{6-24}$ aryl, or a glycidyl ether group, with the proviso that the diglycidyl ether has two glycidyl ether groups.

2. The epoxy resin of Claim 1:

wherein each glycidyl ether group independently has the Formula 2

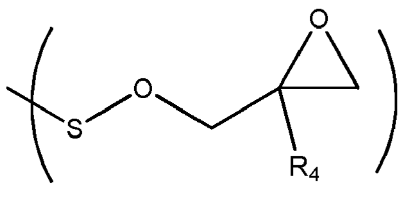

2

wherein $R_4$ is hydrogen or $C_{1-4}$ alkyl, and S is a direct bond, $C_{1-12}$ alkylene, or $C_{6-24}$ arylene;
and/or
wherein the epoxy resin has an oxirane oxygen content of greater than or equal to 90 % of theoretical for the

diglycidyl ether;
and/or
wherein the epoxy resin has a total chlorine content of less than or equal to 2 weight %;
and/or
wherein the diglycidyl ether comprises cis- and trans-2,2,4,4-tetramethylcyclobutane-1,3-diglycidyl ether, and optionally wherein the epoxy resin has an oxirane oxygen content of greater than or equal to 11.2 weight % and an epoxide equivalent weight of less than or equal to 142.5;
and/or
wherein the epoxy resin has a viscosity of less than or equal to 25 cP as determined on an I.C.I. Cone and Plate Viscometer at 25 °C.

**3.** The epoxy resin of Claim 1, comprising:

60 to 99 area % of the diglycidyl ether of Formula 1;
0 to 10 area % of a monoglycidyl ether of Formula 5,

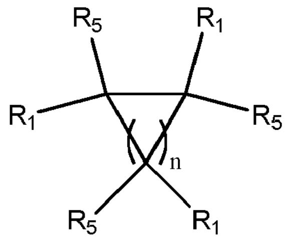

5

wherein n is 1, 2, or 3; each $R_1$ is independently hydrogen, $C_{1-12}$ alkyl, $C_{3-12}$ cycloalkyl, or $C_{6-24}$ aryl; and each $R_5$ is independently hydrogen, $C_{1-12}$ alkyl, $C_{3-12}$ cycloalkyl, $C_{6-24}$ aryl, hydroxyl, $C_{1-12}$ hydroxyalkyl, $C_{6-24}$ hydroxyaryl, or a glycidyl ether group, with the proviso that the monoglycidyl ether has one glycidyl ether group and one hydroxyl, $C_{1-12}$ hydroxyalkyl, or $C_{6-24}$ hydroxyaryl group; and
1 to 30 area % of oligomeric reaction products of an epihalohydrin and a diol of Formula 3

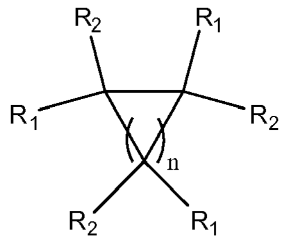

3

wherein n and $R_1$ are as defined above; and each $R_2$ is independently hydrogen, $C_{1-12}$ alkyl, hydroxyl, $C_{1-12}$ hydroxyalkyl, or $C_{6-24}$ hydroxyaryl, with the proviso that the diol has two hydroxyl, $C_{1-12}$ hydroxyalkyl, or $C_{6-24}$ hydroxyaryl groups;
wherein all area percents are based on total peak area for the epoxy resin as determined by gas chromatography.

**4.** The epoxy resin of Claim 3, comprising:

75 to 89 area % of the diglycidyl ether;
1 to 5 area % of the monoglycidyl ether; and
10 to 20 area % of the oligomeric reaction products.

**5.** A method of making an epoxy resin comprising the steps of:

a. forming a reaction mixture comprising a diol of Formula 3

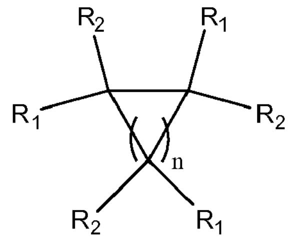

3

wherein n is 1, 2, or 3; each $R_1$ is independently hydrogen, $C_{1-12}$ alkyl, $C_{3-12}$ cycloalkyl, or $C_{6-24}$ aryl; and each $R_2$ is independently hydrogen, $C_{1-12}$ alkyl, hydroxyl, $C_{1-12}$ hydroxyalkyl, or $C_{6-24}$ hydroxyaryl, with the proviso that the diol has two hydroxyl, $C_{1-12}$ hydroxyalkyl, or $C_{6-24}$ hydroxyaryl groups; an epihalohydrin; a phase transfer catalyst; and optionally an organic solvent;

b. contacting a basic acting substance and water with the reaction mixture of step (a);

c. washing the mixture of step (b) with an aqueous solvent to substantially remove salts to form an epoxy resin comprising a diglycidyl ether of Formula 1

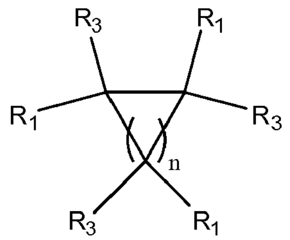

1

wherein n is 1, 2, or 3; each $R_1$ is independently hydrogen, $C_{1-12}$ alkyl, $C_{3-12}$ cycloalkyl, or $C_{6-24}$ aryl; and each $R_3$ is independently hydrogen, $C_{1-12}$ alkyl, $C_{3-12}$ cycloalkyl, $C_{6-24}$ aryl, or a glycidyl ether group, with the proviso that the diglycidyl ether has two glycidyl ether groups; and

d. isolating the epoxy resin.

**6.** The method of Claim 5:

wherein steps (b) and (c) are repeated at least once, and preferably wherein unreacted diol of Formula 3 present in each step (c) is isolated and added back to the reaction mixture in each step (b) and/or an additional amount of phase transfer catalyst is added to the reaction mixture after one or more of steps (c);

and/or

wherein contacting the basic acting substance and water with the mixture of step (a) is accompanied by removal of water by distillation, preferably azeotropic distillation;

and/or

wherein each glycidyl ether group independently has the Formula 2

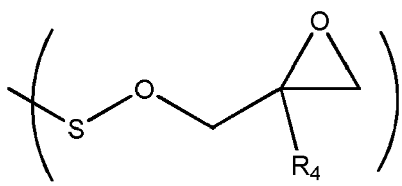

2

wherein $R_4$ is hydrogen or $C_{1-4}$ alkyl, and S is a direct bond, $C_{1-12}$ alkylene, or $C_{6-24}$ arylene;

and/or

wherein the epihalohydrin comprises the epihalohydrin of Formula 4

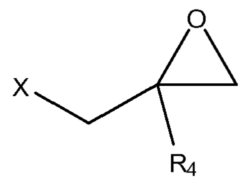

4

wherein $R_4$ is hydrogen or a $C_{1-4}$ alkyl group and X is F, Cl, Br, or I;
and/or
wherein the diglycidyl ether comprises cis- and trans-2,2,4,4-tetramethylcyclobutane-1,3-diglycidyl ether.

7. The method of Claim 5, further comprising isolating the diglycidyl ether of Formula 1 from the epoxy resin, and preferably wherein the diglycidyl ether has an oxirane oxygen content of greater than or equal to 90 % of theoretical and/or wherein the diglycidyl ether has a total chlorine content of less than or equal to 2 weight %.

8. An epoxy resin made by the method of Claim 5, 6 or 7.

9. A curable composition comprising:

an epoxy resin comprising a diglycidyl ether of Formula 1

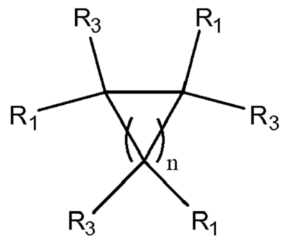

1

wherein n is 1, 2, or 3; each $R_1$ is independently hydrogen, $C_{1-12}$ alkyl, $C_{3-12}$ cycloalkyl, or $C_{6-24}$ aryl; and each $R_3$ is independently hydrogen, $C_{1-12}$ alkyl, $C_{3-12}$ cycloalkyl, $C_{6-24}$ aryl, or a glycidyl ether group, with the proviso that the diglycidyl ether has two glycidyl ether groups;
a curing agent; and
optionally a curing catalyst.

10. The curable composition of Claim 9:

wherein the epoxy resin has an oxirane oxygen content of greater than or equal to 90 % of theoretical for the diglycidyl ether;
and/or
wherein the epoxy resin has a total chlorine content of less than or equal to 2 weight %;
and/or
wherein the curable composition further comprises an auxiliary epoxy resin, which auxiliary epoxy resin preferably has the Formula 6

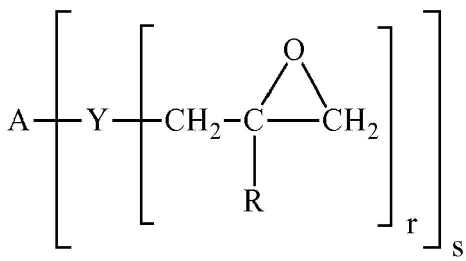

6

wherein A is a an organic or inorganic radical of valence q, Y is oxygen or nitrogen, r is 1 or 2 and consistent with the valence of X, R is hydrogen or methyl, and s is 1 to 1000.

**11.** A method of curing a curable composition comprising reacting the epoxy resin of Claim 1 with a curing agent, optionally in the presence of a curing catalyst.

**12.** A cured composition comprising a reaction product of an epoxy resin comprising a diglycidyl ether of Formula 1

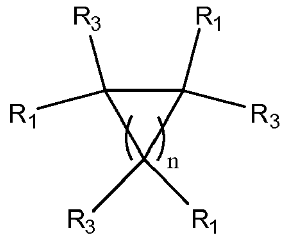 1

wherein n is 1, 2, or 3; each $R_1$ is independently hydrogen, $C_{1-12}$ alkyl, $C_{3-12}$ cycloalkyl, or $C_{6-24}$ aryl; and each $R_3$ is independently hydrogen, $C_{1-12}$ alkyl, $C_{3-12}$ cycloalkyl, $C_{6-24}$ aryl, or a glycidyl ether group, with the proviso that the diglycidyl ether has two glycidyl ether groups; and
a curing agent.

**13.** The cured composition of Claim 12:

wherein the epoxy resin has an oxirane oxygen content of greater than or equal to 90 % of theoretical for the diglycidyl ether;
and/or
wherein the epoxy resin has a total chlorine content of less than or equal to 2 weight %;
and/or
wherein the cured composition has a higher glass transition temperature than an analogous cured composition comprising the diglycidyl ether of cis- and trans-1,4-cyclohexanedimethanol or cis- and trans-1,3- and 1,4-cyclohexanedimethanol instead of the diglycidyl ether of Formula 1.

**14.** An article comprising the cured composition of Claim 12, wherein the article is a coating, an electrical or structural laminate, an electrical or structural composite, a filament winding, a molding, a casting, a potting, an encapsulation, or a capillary underfill in an electronic device.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 3334110 A


### Non-patent literature cited in the description


- **L. R. WHITTINGTON.** Whittington's Dictionary of Plastics. 1968, 239
- *Angew. Makromol. Chem.,* 1975, vol. 44, 151-163
- **HENRY LEE ; KRIS NEVILLE.** Handbook of Epoxy Resins. McGraw-Hill Book Company, 1967
- **HENRY LEE.** Epoxy Resins. American Chemical Society, 1970
- **JAY, R.R.** Direct Titration of Epoxy Compounds and Aziridines. *Analytical Chemistry,* March 1964, vol. 36 (3), 667-668